# EUROPÄISCHE PATENTSCHRIFT

(11) **EP 1 948 475 B1**
(45) Veröffentlichungstag und Bekanntmachung des Hinweises auf die Patenterteilung: **16.07.2014**
(21) Anmeldenummer: 06805413.9
(22) Anmeldetag: 12.10.2006
(51) Int. Cl.: B60N 2/44, B60R 21/207

(54) **AIRBAGSYSTEM, FAHRZEUGSITZ MIT EINEM AIRBAGSYSTEM SOWIE AUSLÖSEVERFAHREN FÜR EIN AIRBAGSYSTEM**
AIRBAG SYSTEM, VEHICLE SEAT COMPRISING AN AIRBAG SYSTEM, AND DEPLOYMENT METHOD FOR AN AIRBAG SYSTEM
SYSTEME D'AIRBAG, SIEGE DE VEHICULE EQUIPE D'UN SYSTEME D'AIRBAG ET PROCEDE DE DECLENCHEMENT D'UN SYSTEME D'AIRBAG

(30) Priorität: 12.10.2005 DE 202005016006 U; 31.10.2005 DE 202005017028 U; 16.03.2006 DE 202006004222 U; 05.04.2006 DE 202006005554 U
(43) Veröffentlichungstag der Anmeldung: 30.07.2008
(73) Patentinhaber: Inova GmbH Technische Entwicklungen, 65428 Rüsselsheim (DE)
(72) Erfinder: MÜLLER, Helmut, 65428 Rüsselsheim (DE)
(74) Vertreter: Lindner, Manfred Klaus
(86) Internationale Anmeldenummer: PCT/DE2006/001796
(87) Internationale Veröffentlichungsnummer: WO 2007/042011

(56) Entgegenhaltungen:
- EP-A1- 0 782 944
- DE-A1- 19 815 381
- DE-A1- 19 860 840
- JP-A- 9 071 205
- JP-A- 10 310 017
- US-B1- 6 357 789

## Beschreibung

Die Erfindung betrifft einen Fahrzeugsitz mit einem Airbagsystem sowie ein Herstellungsverfahren dafür nach den Oberbegriffen der Ansprüche 1 bzw. 21.

Die Anwendung der Erfindung betrifft Land-, Luft- und Wasserfahrzeuge, auch wenn nachfolgend exemplarisch auf einen Fahrzeugsitz eines Kraftfahrzeuges Bezug genommen wird. Vor allem Automobilsitze, wie vorstehend angegeben aber auch Sitze in anderen Fahrzeugarten, erhalten und enthalten immer mehr Sicherheitsausrüstung und -funktionen. Insbesondere Thoraxairbags werden in solche Sitze als Airbagsystem integriert.

In weiterer Ausgestaltung der Technologie gemäß der Patentanmeldung DE 198 60 840 A1 und dem dazu parallelen US-amerikanischen Patent US 6,299,197 sowie der PCT-Anmeldung PCT/DE 2005/000765 jeweils vom selben ursprünglichen Anmelder zum Thema "Laufmaschenöffnung" bei Airbags, die mit genähtem Textil o.ä. abgedeckt sind, beschäftigt sich diese Erfindung mit einer in der Massenproduktion sicheren Montage, insbesondere einer sicheren Montage des Reißbandes, und den Auswirkung davon auf das gesamte System.

Zusammengefasst zeigen diese vorausgehenden Anmeldungen ein Reißmittel, wie beispielsweise ein Band, einen Faden oder dergleichen, das mit einer vorgesehenen Durchtrittsnaht für den Airbag vernäht ist. Durch verschiedenartige "Umlenkungen" wird das Reißmittel/Band so montiert, dass der Airbag zu Beginn seiner Entfaltung eine Belastung aufbringt, die mit dem Reißmittel eine Laufmasche bzw. ein Loch in die geplante Aufreißnaht reißt. Danach ist der sich weiter entfaltende Airbagt leicht in der Lage, die Reißnaht weiter zu öffnen. Das System funktioniert besser als alle anderen Systeme und ist im Ergebnis unabhängig von der Nahtart und Stoffqualität.

Die heute im Einsatz befindliche Technik hat das Problem der sich schwer öffnenden Nähte anders gelöst. Die Nähte werden geschwächt und bedürfen in Verbindung mit dehnungsweichen Materialien dehnungsarme, zusätzlich eingenähte Manschetten: Das alles ist sehr fertigungs- und materialsensibel. Aufwendige Überwachungsprüfungen sind notwendig.

Die US-A-6357789 B 1 offenbart einen Sitz mit einem Seiten-Airbag-System, wobei sich zwei Spannstoffe kontinuierlich von einem Nahtbereich aus erstrecken, der einem Bruchbereich einer Innenausstattung entspricht. Ein Spannstoff ist von einem Öffnungsrand eines Rückenpolstcrs in eine Öffnung zur Befestigung darin eingezogen. Der andere Spannstoff ist von einer Vorderseite eines Airbag-Systems in eine Rückseite des Rückenpolsters zur Befestigung dort eingerollt. Das Airbag-System ist von den zwei Spannstoffen umwickelt. Damit soll jeder der Spannstoffe leicht montiert und das Airbag-System direkt von den zwei Spannstoffen umwikkelt werden können, um einen Aufblasdruck des Airbags auf den Nahtbereich konzentrieren zu können, wodurch sich der Airbag schnell aufblasen und ausdehnen können soll.

Aus der DE 19815381 ist ein Dachhimmel für ein Fahrzeug mit wenigstens einem AirbagModul bekannt, das im Bereich des Fahrzeugdaches angeordnet ist. Das Airbag-Modul hat cinen Airbag und eine Gasleitung, die in den Dachhimmel integriert sind, so dass das AirbagModul und der Dachhimmel eine Einheit bilden.

Die EP 782944 A1 betrifft eine Seiten-Airbag-Vorrichtung, die in ein Sitzseitenteil integriert ist. Beim Ausdehnen des Airbags wird ein Nahtteil des Sitzbezugmaterials durch den >Ausdehnungsdruck des Airbags aufgerissen. Ein gurtähnlicher Körper zum Konzentrieren des Ausdehnungsdruckes des sich ausdehnenden Airbags ist angeordnet, um das Aufreißen des Nahtteils des Bezugmaterials auszulösen, wodurch ein schnelles Aufreißen des Nahtteils ermöglicht wird. Zusätzlich ist bei dieser bekannten Seiten-Airbag-Vorrichtung ein Sitzkissen zwischen einem Airbag-Gehäuse und dem Sitzbezugmaterial angeordnet, wodurch ein angenehmes Sitzgefühl gewährleistet werden soll.

Die vorliegende Erfindung hat und erreicht das Ziel, die vorbekannte und frühere Technologie weiter zu verbessern und eine zuverlässige Airbagfunktion schon bei der Montage auf einfache und unaufwendige Weise zu gewährleisten.

Die Erfindung schafft damit einen Fahrzeugsitz, enthaltend einen Bezug und ein Airbagsystem mit einem Airbagmodul, wobei eine integrierte Öffnungstechnik gleichzeitig automatisch mit dem Airbagmodul befestigt wird, nach dem Anspruch 1.

Damit löst die vorliegende Erfindung insbesodnere in vorteilhafter Weise das Problem der automatischen Überwachung bei der Montage eines Bandes in Großserie und hat damit auch auf die Wahl der bevorzugten Reißtechnik Einfluss.

In weiterer Ausgestaltung ist vorzugsweise jeweils alleine oder in beliebigen Kombinationen vorgesehen,
- dass die Befestigung eine mit Drehmoment elektronisch abgefragte Verschraubung ist,
- dass die Befestigung eine elektronisch abgefragte Nietung oder dergleichen ist,
- dass der Unterboden des Airbagmoduls mit einem Reißsystem einer Airbagöffnung gemeinsam zertifiziert befestigt wird,
- dass das Airbagmodul einen Deckel hat, und dass der Deckel des Airbagmoduls einen Durchgang für die Anbindung eines Reißmittels hat,
- dass das Airbagmodul einen Deckel hat, und dass der Deckel des Airbagmoduls eine Verstärkung an seiner Vorderkante hat, wobei insbesondere die Verstärkung während der Airbagentfaltung als Umlenkung für ein Reißmittel/Reißband dient und dieses anhebt bzw. umlenkt und damit aus einer Airbagaufreißnaht austreten läßt, und/oder
- dass Reißmittel vorgesehen sind, die als gewebtes Band oder insbesondere gewebtes Formstück zur Bildung eines Reißbandes gestaltet sind, wobei insbesondere weiter vorgesehen sein kann,
   dass das Reißband in T-Form eingenäht ist, um ein möglichst großes Loch zu reißen, dass das Reißband V-förmig eingenäht ist, um eine größere Schälwirkung zu erzielen, und/oder
   dass das Reißband X-förmig eingenäht ist, um ein großes Loch und Durchtritt durch einen Fügefaden zu erreichen,
   wobei weiterhin mit Vorzug vorgesehen sein kann,
   dass das Reißband nur mit der Fügenaht vernäht ist, um geringe Außreißkräfte zu erreichen, und/oder
   dass das wenigstens ein Reißband dort vernäht ist, wo der Airbag zuerst austreten soll.

In noch weiterer Ausgestaltung ist vorzugsweise jeweils alleine oder in beliebigen Kombinationen ergänzend oder alternativ zu den vorstehend erläuterten Varianten vorgesehen,
- dass ein Reißbandöffnungssystem derart gestaltet ist, dass eine doppelt große Einzugslänge relativ zur Bewegung des Deckels ausgeführt wird, wobei insbesondere eine weitere Umlenkung nach der Physik des Flaschenzugs diese Verdopplung des Einzugs bewirkt, und wobei noch weiter vorzugsweise vorgenannte Maßnahmen zertifixiert verbaut werden müssen, wobei ferner bevorzugt Umlenkung, Befestigung und Verschraubung des Modules mit einer einzigen elektronisch Drehmoment kontrollierten Schraube durchgeführt werden können,
- dass ein Reißnahtsystem derart gestaltet ist, dass die höheren Kräfte wieder kompensiert werden,
- dass ein Reißbandsystem derart gestaltet ist, dass Umlenkung und Verschraubung nicht verlierbar mit angeliefert werden mit dem Sitzbezug, um eine gezielt zertifizierbare Verschraubung zu erreichen,
- dass ein "Softcover"-Modul enthalten und derart ausgeführt ist, dass es die Technik der Reißbandöffnung mit beinhaltet, wobei vorzugsweise eine untere Softcoverhälfte derart gestaltet ist, dass sie den Schaum abdeckt, um Brockenflug zu verhindern, und/oder obere und untere "Softcover"-Hälften derart gestaltet sind, dass sie ein Loch haben zur Aufnahme der Befestigungsschraube für Reißband und Modul, und/oder
   eine obere Softcoverhälfte derart verstärkt ist, dass sie beim Öffnen das Reißband mitnimmt, und/oder
   das Softcovermodul derart mit einer einzigen Blechstreifenstruktur versehen ist, dass diese in den Airbag eingesteckt werden bzw. durchgesteckt werden kann, wobei insbesondere die Blechstruktur derart mit Haken versehen ist, dass das Modul in die Sitzlehnenstruktur eingehängt werden kann, und wobei weiter vorzugsweise die Blechstruktur derart mit einem Loch versehen ist, dass damit das Modul und das Reißbandsystem mit einer einzigen Schraube montiert werden können.

Durch die Erfindung wird ferner ein Herstellungsverfahren für einen Fahrzeugsitz mit einem solchen Airbagsystem geschaffen.

Bevorzugte und/oder vorteilhafte Ausgestaltungen der Erfindung ergeben sich aus den Ansprüchen und deren Kombinationen sowie den gesamten vorliegenden Anmeldungsunterlagen.

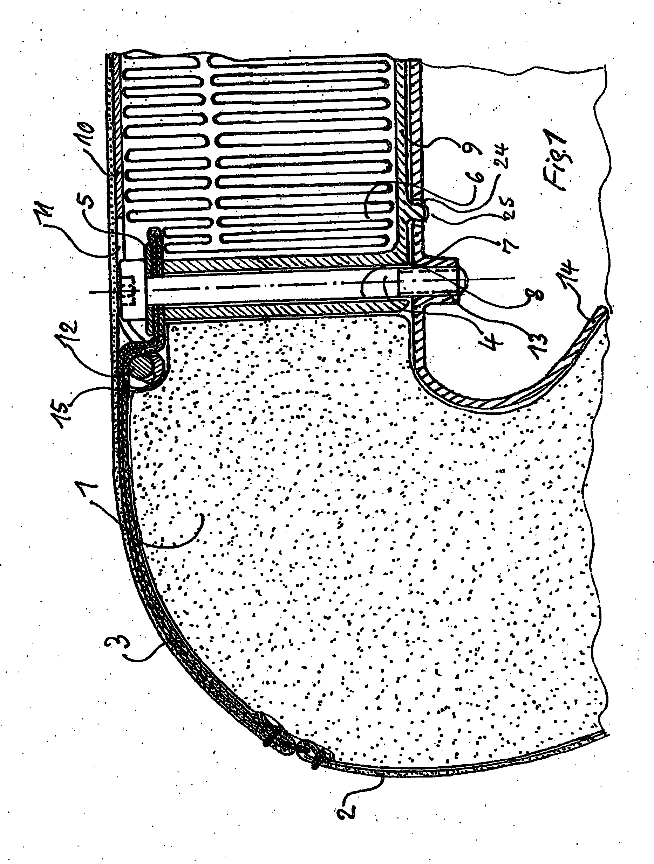

Die Erfindung wird anhand von Ausführungsbeispielen nachfolgend unter Bezugnahme auf die Zeichnungen lediglich exemplarisch näher erläutert, in denen
- Fig. 1 bis 53: Ausführungsbeispiele der Erfindung verdeutlichen.

Anhand der nachfolgend beschriebenen und in den Zeichnungen dargestellten Ausführungs- und Anwendungsbeispiele wird die Erfindung lediglich exemplarisch näher erläutert, d.h. sie ist nicht auf diese Ausführungs- und Anwendungsbeispiele oder auf die jeweiligen Merkmals-Kombinationen innerhalb einzelner Ausführungs- und Anwendungsbeispiele beschränkt. Verfahrens- und Vorrichtungsmerkmale ergeben sich jeweils analog auch aus Vorrichtungs- bzw. Verfahrensbeschreibungen.

Einzelne Merkmale, die im Zusammenhang mit konkreten Ausführungsbeispielen angeben und/oder dargestellt sind, sind nicht auf diese Ausführungsbeispiele oder die Kombination mit den übrigen Merkmalen dieser Ausführungsbeispiele beschränkt, sondern können im Rahmen des technisch Möglichen, mit jeglichen anderen Varianten, auch wenn sie in den vorliegenden Unterlagen nicht gesondert behandelt sind, kombiniert werden.

Gleiche Bezugszeichen in den einzelnen Figuren und Abbildungen der Zeichnungen bezeichnen gleiche oder ähnliche oder gleich oder ähnlich wirkende Komponenten. Anhand der Darstellungen in der Zeichnung werden auch solche Merkmale deutlich, die nicht mit Bezugszeichen versehen sind, unabhängig davon, ob solche Merkmale nachfolgend beschrieben sind oder nicht. Andererseits sind auch Merkmale, die in der vorliegenden Beschreibung enthalten, aber nicht in der Zeichnung sichtbar oder dargestellt sind, ohne weiteres für einen Fachmann verständlich.

Ferner ist die Bezugszeichenliste am Ende dieser Beschreibung explizit Bestandteil dieser Beschreibung.

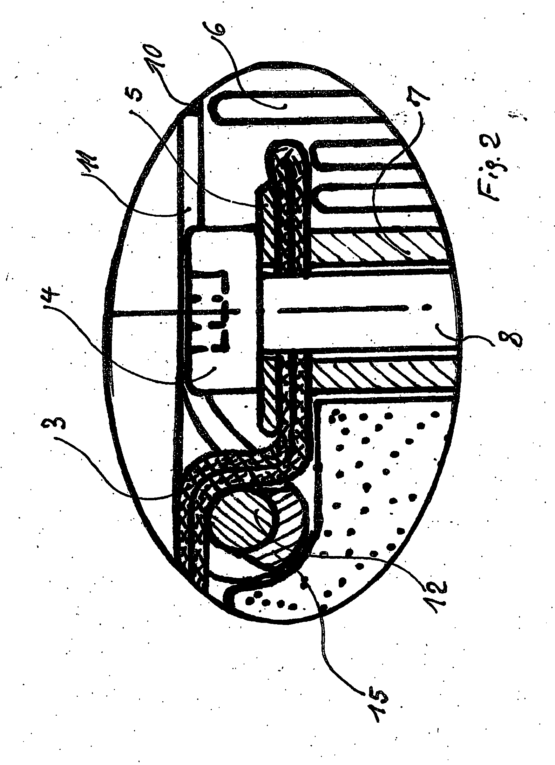

Die Fig. 1 zeigt im Schnitt eine Sitzlehne 1 mit einem im Bezugsstoff 2 eingenähten Reißband 3, das mit einer unverlierbaren Schraube 4 mit Beilagscheibe 5 versehen ist. Ein Airbagmodul 6 ist mit einem Dom 7 mit einem Durchgangsloch 8 angegossen am Modulboden 9 des Airbagmoduls 6 versehen. Ein Deckel 10 des Airbagmoduls 6 hat ein Durchgangsloch 11 für den Zusammenbau des Reißbandes 3 mit der Schraube 4. An der Vorderkante eines Durchgangslochs 11 ist eine Verstärkung 12 eingegossen. Bei der Montage wird der Zusammenbau des eingenähten Reißbandes 3 mit seiner Schraube 4 und Beilagscheibe 5 in einem Sitzlehnenrahmen 14 verschraubt. Da das Reißband 3 am Bezugsstoff 2 befestigt ist, muss diese Verschraubung in dem Moment vorgenommen werden, in dem der Bezugsstoff 2 halb über den Sitzlehncnrahmen 14 gezogen ist. Dabei wird über den Dom 7 automatisch der Modulboden 9 mit verschraubt. Dabei kommt das Reißband 3 automatisch auf einer integrierten "Umlenkung" 15 im Deckel 10 zu liegen. Vorteilhaft und daher bevorzugt bei diesem Airbagsystem mit dem Airbagmodul 6 ist, wenn dieses gemeinsame Anschrauben des Airbagmoduls 6 und des Reißbandes 3 mit einem elektronisch überwachten Schrauber (nicht gezeigt) verschraubt wird. Hiermit ist gewährleistet, dass nur Sitzlehnen 1 mit korrekt verschraubtem Airbagmodul 6 und Reißband 3 das Montageband (nicht gezeigt) für den Sitz verlassen. Die Fig. 2 zeigt noch einmal wichtige Details.

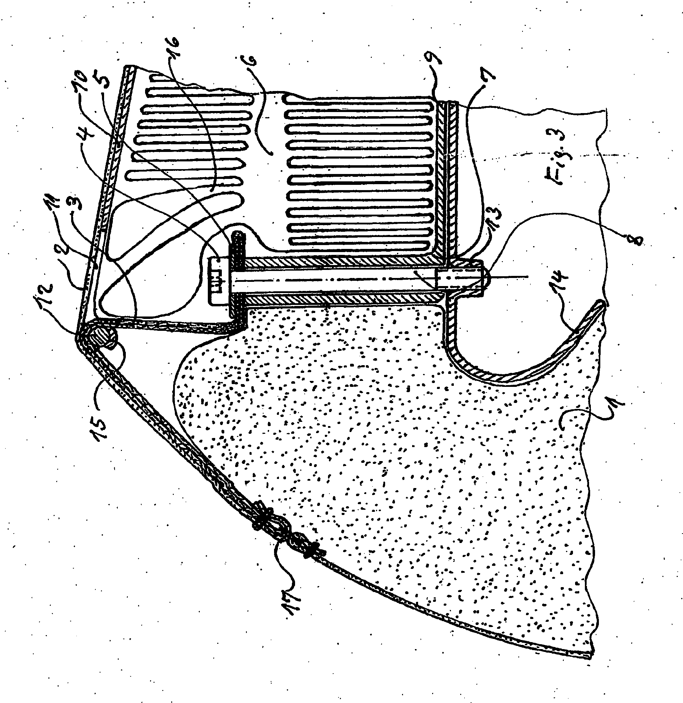

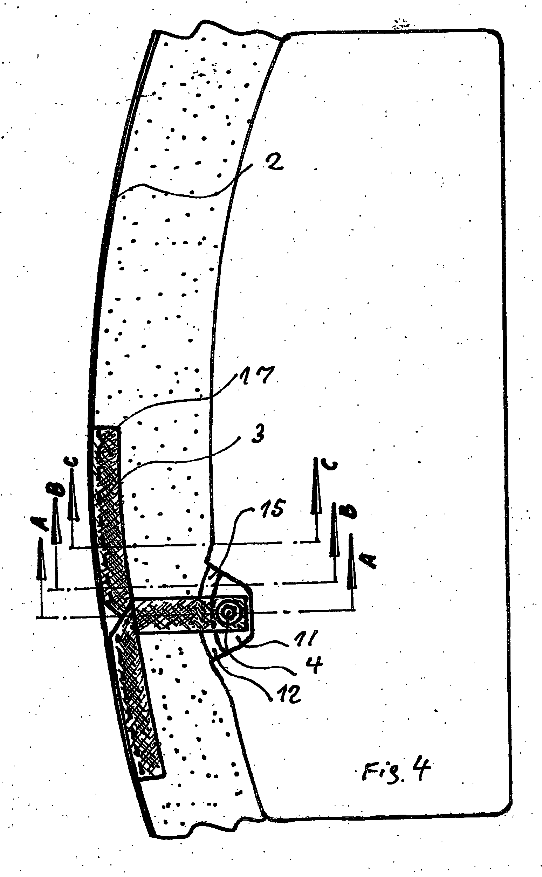

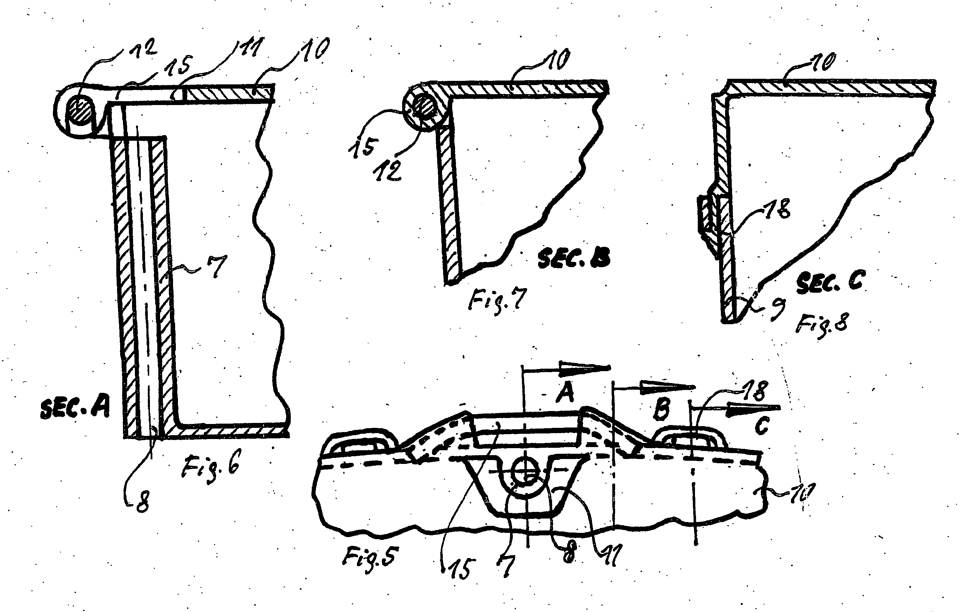

In der Fig. 3 wird der Moment eines sich entfaltenden Airbags 16 gezeigt. Der Airbag 16 hebt dabei den Deckel 10 des Airbagmoduls 6 an. Dabei wird auch die Umlenkung 15 angehoben und damit das Reißband 3 verkürzt. Der Airbag 16 stößt bei seinem Austritt gegen das Reißband 3 an beiden Seiten. Die Fig. 4 zeigt das Airbagmodul 6 in einer Draufsicht mit einem nach links und rechts Austritt das Reißband 3 weiter nach vorn, bis dieses an einer Airbagaustrittsnaht 17 des Bezugsstoffes ausreißt. Von dem entstehenden Loch aus (nicht gezeigt) öffnet der Airbag 16 den Bezugsstoff 2 an der Airbagaustrittsnaht 17 reißversehlussartig nach abgefaltetem Reißband 3 vernäht im Bezugsstoff 2 und verschraubt mit dem Airbagmodul 6. Dabei kommt das Reißband 3 automatisch auf der Umlenkung 15 zu liegen. Die drei angegebenen Schritte finden sich in den Fig. 5 bis 8. Die Fig. 5 zeigt als Ausschnitt vom Airbagmodul 6 den modifizierten erfindungsgemäßen Bereich. Zwischen den technisch bevorzugten und teilweise üblichen Verbindungen 18 von Deckel 10 und Modulunterboden 9 sind ein Durchgangsloch 11 im Deckel 10 und eine Verstärkung 12 angebracht. Der Schnitt A zeigt im Mittelschnitt den Dom 7 als Teil des Modulbodens 9 und im Deckel 10 das Durchgangsloch 11 für das Reißband 3 und dessen Schraube 4 und die Verstärkung 12 in der Umlenkung 15. Der Schnitt B zeigt die Verstärkung 12 im Deckel 10. Der Schnitt C zeigt eine technisch vorteilhafte und teilweise übliche Verbindung 18 zwischen Modulboden 9 und Deckel 10.

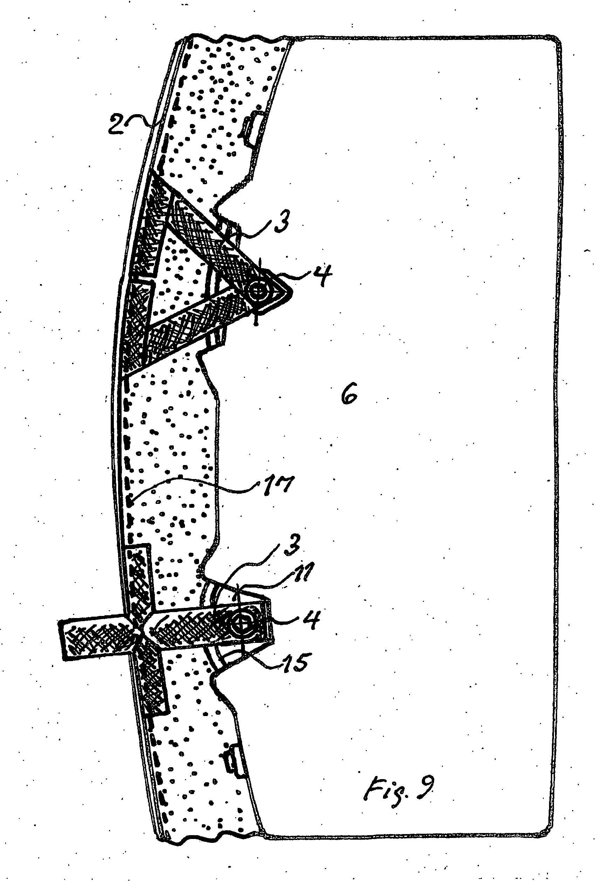

Die Fig. 9 zeigt Alternativen in der Anordnung und Ausführung des Reißbandes 3. Das obere Reißband 3, in diesem Fall für einen Thoraxbag, reißt optimal schräg nach innen das Anfangsloch. Das untere Reißband 2, in diesem Falle für den Durchtritt eines Pelvisbags, tritt durch die Airbagaustrittsnaht 17 und findet z.B. in vorteilhafter Weise gleichzeitig Anwendung zur Airbagaufschrift.

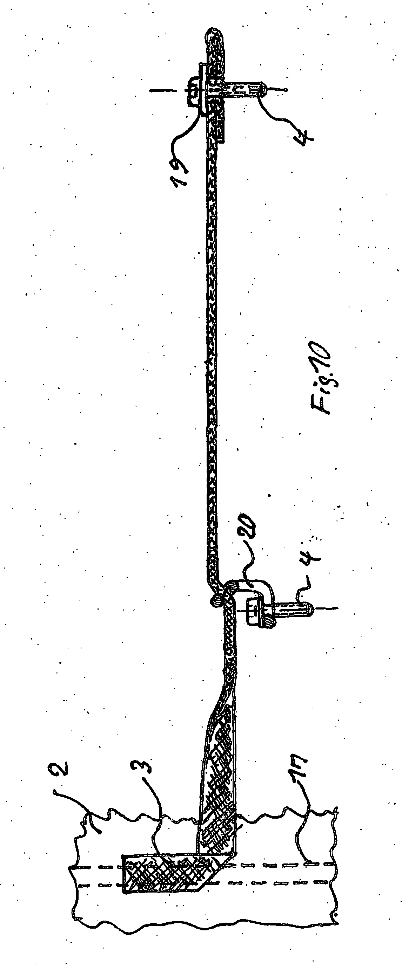

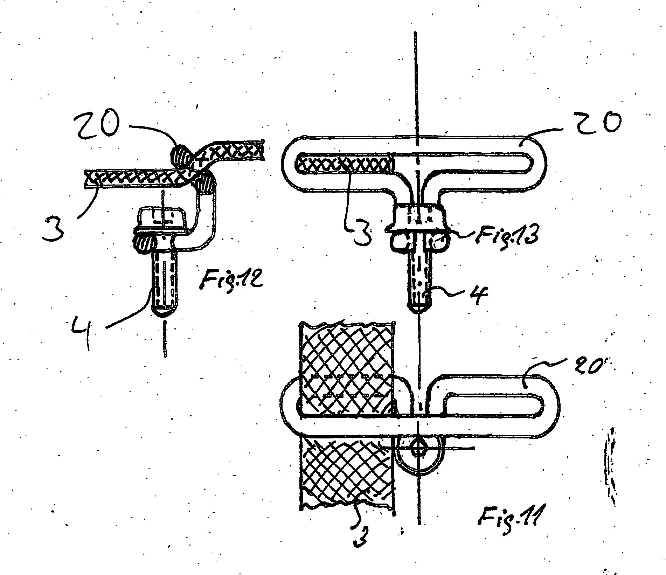

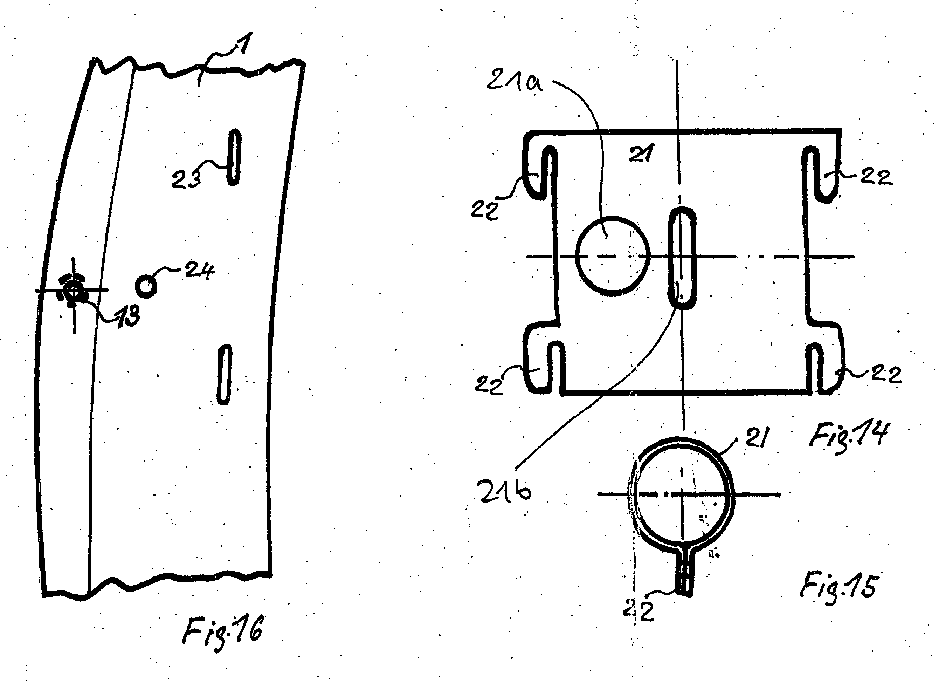

Die Fig. 10 zeigt eine weitere alternative Ausführung für den Fall, dass das Reißband 3 auf der Hinterseite des Airbagmoduls 6 z.B. mit einem Generator (nicht gezeigt) verschraubt werden soll. Das Reißband 3 wird dann neben einer Befestigung 19 mit einer Umlenkung 20 versehen, die alternativ am Modulboden 9 oder am Sitzlehnenrahmen 14 verschraubt werden kann. Das Reißband 3 verläuft dann quer über das Airbagmodul 6. Die Fig. 11 bis 13 zeigen die Details der Umlenkung 20 in den für einen technischen Fachmann leicht verständlichen und üblichen drei Ansichten. Infolge einer solchen vorzugsweisen Zertifizierung ergeben sich auch für die Anbindung des Airbagmoduls an die Sitzlehne neue Techniken. Die Fig.14 zeigt ein Gasleitblech 21, das derart gestaltet ist, dass zwei Haken 22 zum Einhängen bei der Montage angeformt sind. Das Gasleitblech 21 wird, wie in der Fig. 15 gezeigt ist, zur Befestigung des Gasgenerators darin umgeformt. Wenn keine Gasleitung mittels Blech erforderlich ist, können 2 Haken auch direkt an der Kartusche befestigt sein. Ferner weist das Gasleitblech 21 einen Gasaustritt 21a und eine Befestigung 21b der Kartusche auf. In der Fig. 16 sind zwei Einhängeschlitze 23 in dem Sitzlehnenrahmen 14 zu sehen. Weiter ist ein Loch 24 zur Lagefixicrung des Airbagmoduls 6 vorgesehen. In dieses Loch 24 wird ein Nocken 25, der am Modulboden 9 angegossen ist, eingerastet. Das erleichtert die Lagefindung der im Sitzlehnenrahmen 14 befestigten Gewindemutter 13. Mit dieser Gewindemutter 13 werden gemeinsam das Airbagmodul 6 bzw. der Modulboden 9 und das Reißband 3 mit der Schraube 4 befestigt (siehe auch die Fig. 1 bis 3). Selbstverständlich ist diese Technik unter dem Bezugsstoff von Sitzen nicht nur auf Thorax/ Pelvisairbags beschränkt. Jede Art von Airbags, die mit einer zugenähten Abdeckung versehen sind, kann mit dieser Technik insbesondere einfach zertifizierbar "vorgeöffnet" werden.

Bei den nachfolgend erläuterten zwei weiteren Ausführungsbeispielen handelt es sich um zwei weitere Alternativen der Ausführung der Reißbandtechnik für ein Airbassystem, das unter einer vernähten Textilabdcckung untergebracht ist. Das ist insbesondere ein Seitenairbag in der Sitzlehne.

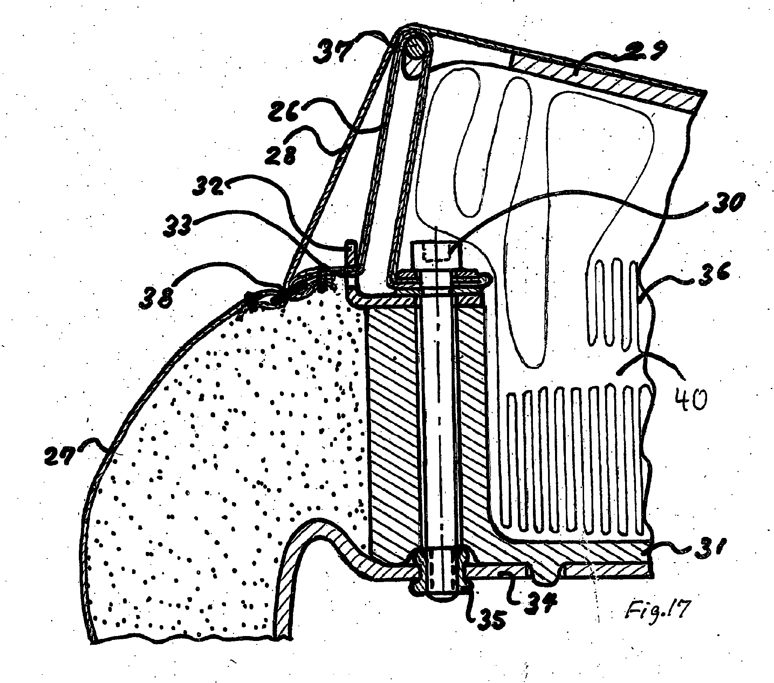

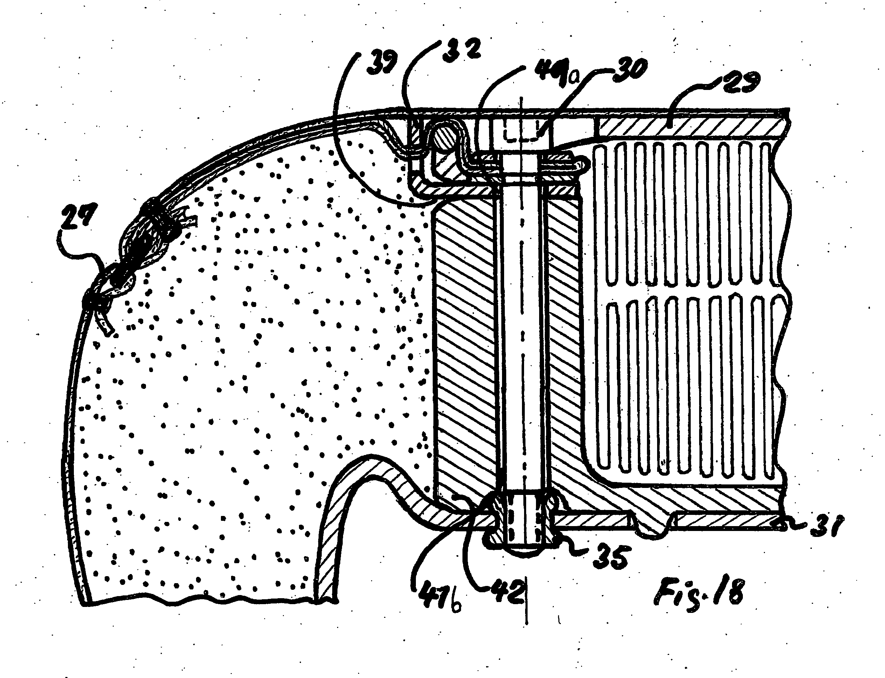

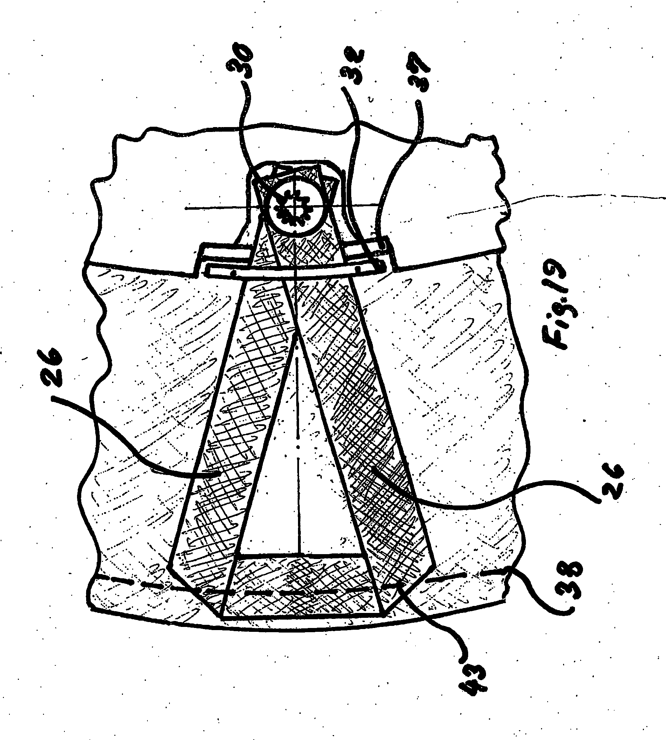

Die Fig.17 und die Fig. 18 zeigen die Alternative zur doppelten Einzichlänge des Reißbandes, was bei harten Böden im Bezug, wie z.B. Echtleder, vorteilhaft ist. Im Vordergrund steht dabei die zertifizierbare Montage. Die Fig. 17 zeigt abweichend von der in der Fig. 3 gezeigten Einziehtechnik des Reißbandes 26 eine doppelte Einziehstrecke des Reißbandes 26 nach dem System eines Flaschenzuges. Vorteilhaft ist diese große Einzuglänge bei "harten" Sitzbezügen 27, wie z.B. Echtleder, im Boden 28. Der Moduldeckel 29 braucht sich hier nur die halbe Strecke zu öffnen. Um dies zu gewährleisten, wird zuerst das Reißband 26 mit einer Schraube 30 im Unterboden 31 des Airbagmodules 40, wie im Zusammenhang mit den Alternativen 1 bis 3 beschrieben wurde, befestigt. Zusätzlich wird ein Umlenkblech 32 angeschraubt, durch dessen Schlitz 33 das Reißband 26 geführt wird. Die Schraube 30 wird, wie bisher, an der Sitzlehne 34 in einer Mutter 35 verschraubt. Die Fig. 17 zeigt den Beginn des Crashs. Hier wird der Moduldeckel 29 mit dem Airbag 36 aufgedrückt. Die Umlenkung 37 des Reißbandes im Moduldeckel zieht 2 Trams des Reißbandes nach oben. Damit ist die Airbagaufreißnaht 38 in der halben Zeit bzw. bei halber Moduldeckel-Öffnung im Vergleich zu der Fig. 3 aufgerissen. Die Fig. 18 zeigt die in der Fig. 17 gezeigte Technik im Ruhezustand. Das Umlenkblech 32 und die Schraube 30 werden als Zusammenbau bereits am Sitzbezug 27 vernäht unverlierbar angeliefert. Zur sicheren Zertifizierung der Montage wird das Umlenkblech 32 z.B. zwischen Unterboden 31 und Moduldeckel 29 in eine dafür vorgesehene Aussparung 39 derart eingesteckt, dass das Loch 41 a im Umlenkblech 32 für den Durchgang der Schraube 30 in das Loch 41b des Domes 42 am Unterboden 31 und damit die elektronisch überwachte Anschraubung in der Mutter 35 möglich ist. Durch diese Flaschenzugtechnik erzeugt die Belastung durch doppelt schnelle bzw. auf halber Öffnungsstrecke des Moduldeckels 29 durchgeführter Reißbandeinzug doppelte Kraft des Airbags 36 auf den Moduldeckel 26, wenn die Reißbänder 26 angeordnet sind, wie in der Fig. 19 gezeigt ist. Entsprechend ist es vorteilhaft, im spitzen Winkel der Annähung 43 die Reißbänder 26 zu vernähen.

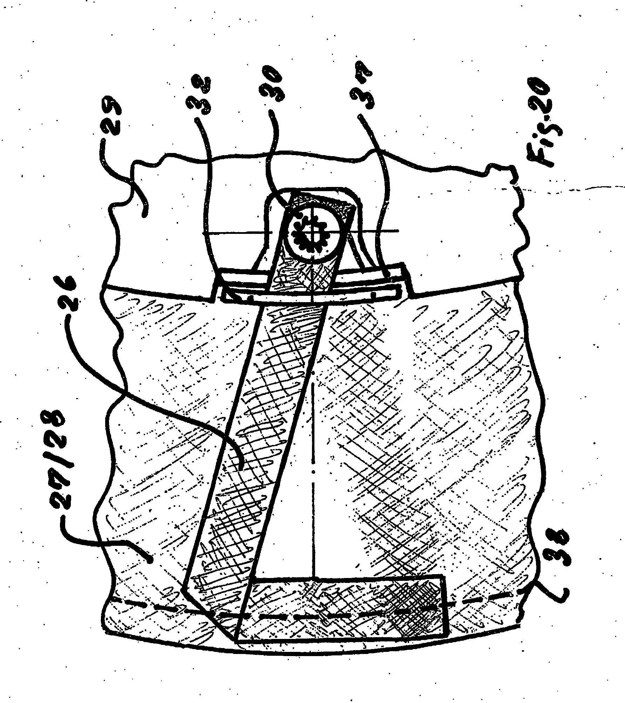

Die Fig. 19 und die Fig. 20 zeigen Reißbandanordnungen, die alternativ die höheren Kraftanforderungen des Airbags nach den Fig. 17 und 18 wieder kompensieren. Die Fig. 19 zeigt die Anordnung der Reißbänder 26, der Schraube 30, des Umlenkbleches 32, der Umlenkung 37 und der Airbagaufreißnaht 38 in der Draufsicht. Wird jedoch die Reißbandanordnung durchgeführt, wie in der Fig. 20 gezeigt ist, so halbiert sich die notwendige Kraft des Airbags 36. Die Fig. 20 zeigt den Zusammenbau vom Reißband 26 mit dem nicht verlierbaren Umlenkblech 23 und der nicht verlierbaren Schraube 30. Wenn ein doppelt großer Einzug des Reißbandes 26 nicht benötigt wird, fällt das Umlenkblech weg (nicht gezeigt), wie z.B. bei Stoff- und Kunstlederböden. Das Reißband 26 von diesem Zusammenbau wird mit der Airbagaufreißnaht 38 vernäht und an der Sitzlehne 34 wie vorgesehen "zwangs"-montiert. Somit ist die zertifizierte Montage gewährleistet (siehe auch Beschreibung zur Fig. 17).

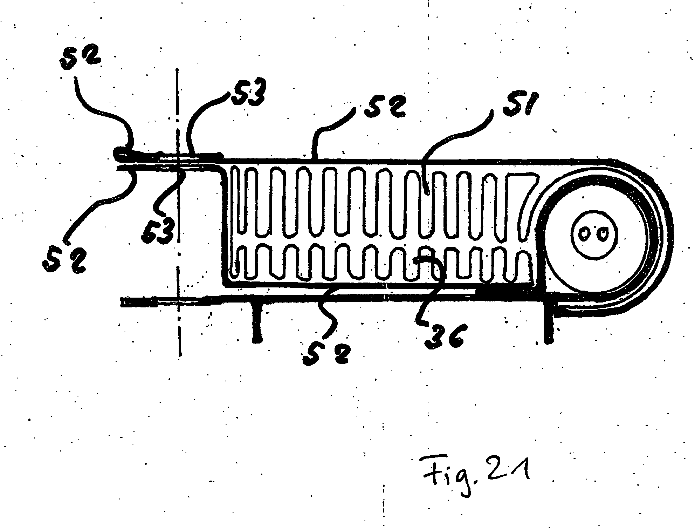

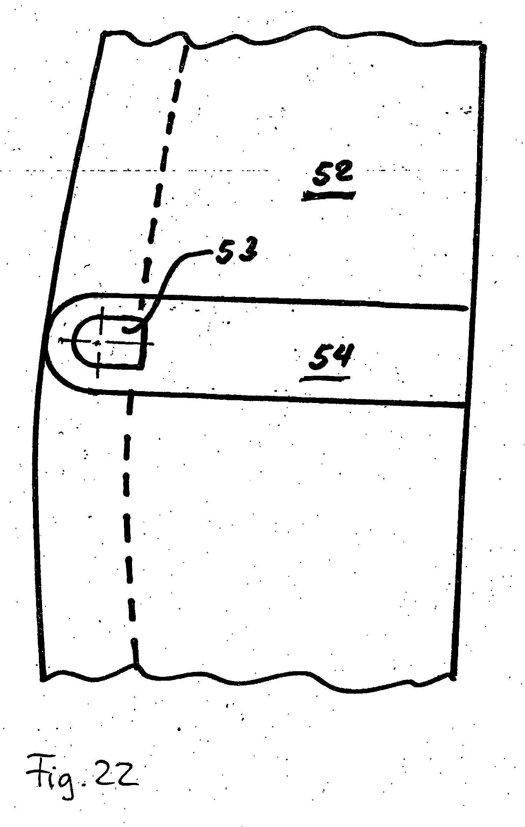

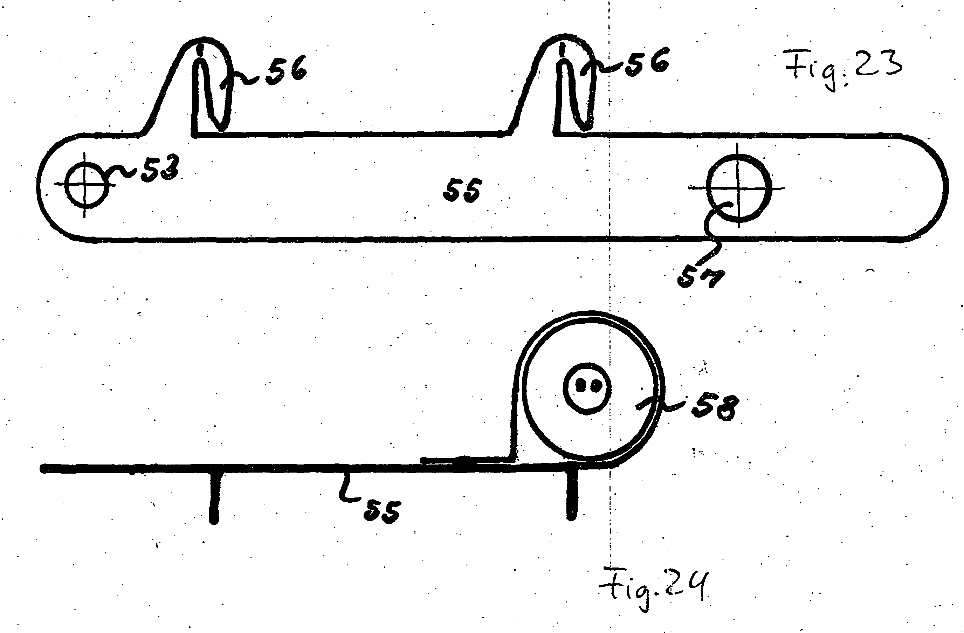

Eine weitere Alternative ist ein Airbagmodul 51 mit sog. "Softcover" 52. "Softcover" 52 bedeutet die Einhüllung des Airbags 36 mit einem Textil/Papier 37 o.ä. zwecks Kosteneinsparung. Die Fig. 21 bis zu den Fig. 24 zeigen "Softcover"-Module und die Änderungen, die für die Reißbandtechnik notwendig sind. Die Fig. 21 zeigt ein derartiges Airbagmodul 51, das für die vorliegend betroffene Reißbandtechnik wie folgt geändert ist: Der untere Teil des "Softcovers" 52 ist Z-förmig um die Schaumkaate (nicht gezeigt) gelegt, um Schaumbrockenflug bei der Entfaltung des Airbags 36 zu verhindern; der obere Teil des Softcovers 52 ist parallel oben aufgelegt, wie gezeigt ist. Beide Softcoverhälften werden als Transport- und Lagesicherung "leicht" durch z.B. Kleben oder Vernähen miteinander verbunden; beide "Softcover"-Hälften haben zur Verschraubung des Reißbandes 26 Löcher 53, wie gezeigt ist. In der Fig. 22 wird ein derartiges "Softcover"-Airbagmodul 51 in der Draufsicht gezeigt. Um die Verkürzung des Reißbandes 26 zu erreichen, wird die obere Softcoverhälfte mit einer Verstärkung 54 versehen, die ein Loch 53 für den Durchgang der Schraube 30 hat. Zur Struktur des "Softcover"-Modules wird erfindungsgemäß ein Blech 55 , wie in den Fig. 23 und Fig. 24 gezeigt, vorgeschlagen. Das Blech 55 hat, wie in den Fig. 23 gezeigt ist, zwei Haken 56, die rechtwinklig nach unten gebogen in der Sitzlehne 34 in Schlitzen (nicht gezeigt) befestigt werden können. Zur Fixierung der Haken 56 dient ein Loch 57, durch welches das Blech 55 mit der gemeinsamen Schraube 30 mit Umlenkblech 32 und Reißband 26 verschraubt werden kann. Das weiter gezeigte Loch 58 im Blech 55 dient dem gezielten Gasdurchgang. Das Blech 55 wird um den Generator 58 geführt und mit sich selbst derart verelincht, wie in der Fig. 24 gezeigt ist, dass es den Generator 58 einklemmt. Die Fig. 24 zeigt auch im Zusammenbau die Haken 56 zur Befestigung des Modules. In der Fig. 21 ist ersichtlich, wie das Blech 55 aus dem Airbag 36 durchgesteckt wird. Der Generator 58 wird in vorteilhafter Weise von der Seite eingesteckt.

Spezielle Vorteile der vorstehenden weiteren Ausführungsbeispiele (Fig. 17 bis Fig. 24) bestehen darin, dass sich Airbagmodule, die den Textilbezug einfachst nach der Reißbandtechnik öffnen, hier mit alternativen Techniken zertifiziert einfach und kostengünstig montieren lassen. Das funktioniert sogar mit neuartigen "Softcover"-Modulen, die entsprechend ausgeführt sind. Weiterhin ist eine bessere Airbagentfaltung mit geringerem technischen Aufwand als heute und damit mehreren Euro Einsparung pro Sitz vorteilhaft.

Die Ausführungen gemäß den Fig. 9 und 10 sind insbesondere auch im Zusammenhang mit den Varianten zu sehen und zu verstehen, die in den Fig. 17 bis zu 24 gezeigt sind und unter Bezugnahme darauf vorstehend beschrieben wurden.

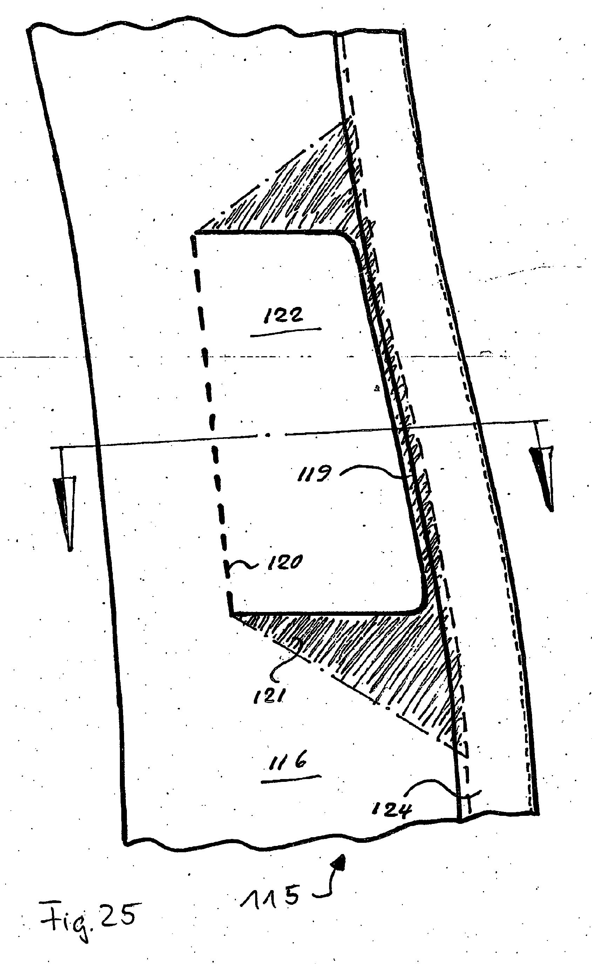

Die Fig. 25 zeigt eine Alternative, wie man sichtbare Thoraxbags in nicht sichtbare verwandelt bei Sportsitzen 1, 15, die mit einer Kunststoffschale 116 abgedeckt sind, die mit Leder, Kunstleder 117 usw. bezogen sind. Solche Sitze werden z.B. bei Porsche eingesetzt. Die Thoraxbagabdeckung 118 wird in die Kunststoffschale 116 integriert und wie technisch üblich mit einer U-förmig umlaufenden Sollbruchstelle 119 und einem Filmscharnier 120 versehen. Der Bezug 117 aus Leder, Kunstleder usw. wird in dem schraffierten Bereich 121 nicht oder schwach verklebt. Beim Crash wird mit der Thoraxbagabdeckung 118 der Bezug aus Leder, Kunstleder usw.117 angehoben und gedehnt, derart, dass sich daraus eine Öffnung für den Airbag 111 ergibt.

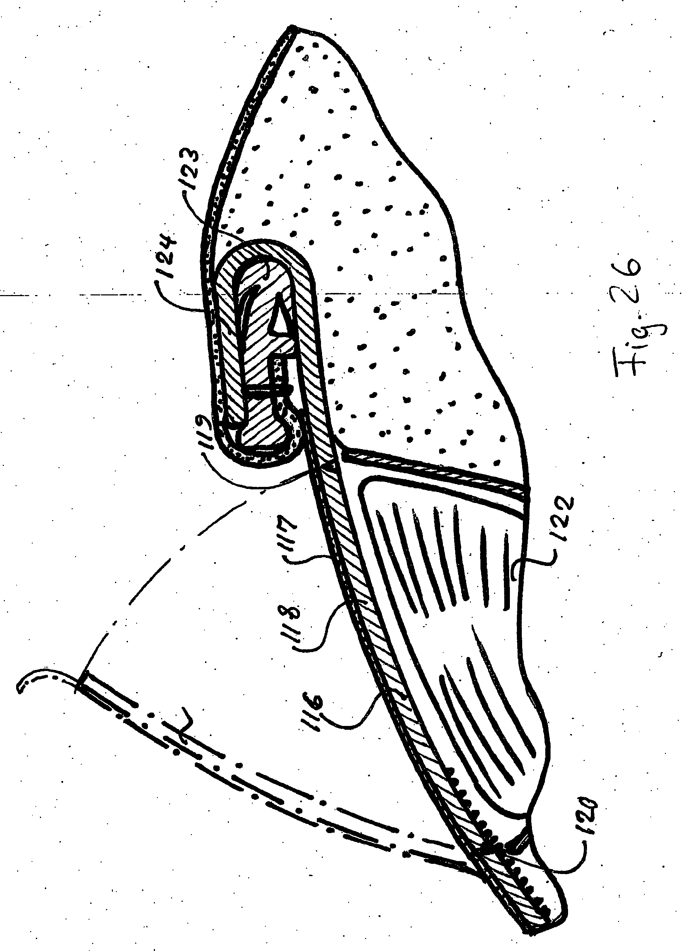

Die Fig. 26 zeigt im Schnitt die Anordnung des Airbagmoduls 122 mit der integrierten Thoraxairbagabdeckung 118 in geschlossener und strichpunktiert in offener Stellung. Wie heute technisch ausgeführt wird, ist der vordere Sitzbezug 112 an einem Keder 123 angenäht. Der Keder 123 mit dem Sitzbezug 112 ist in eine U-förmige Abstellung 124 der Kunststoffschale 116 eingehängt. Die Neuerung bei diesem Ausführungsbeispiel ist, dass der Bezug aus Leder, Kunstleder usw. 117 in der U-förmigen Abstellung 124 mit eingeklemmt ist, ohne jedoch verklebt zu sein. Eine Alternative ist eine schwache Verklebung. Beim Crash wird der Bezug aus Leder, Kunstleder usw. 117 aus der U-förmigen Abstellung 124 herausgezogen und dem Airbag 111 der Weg frei gegeben. Dabei bildet der Bezug aus Leder, Kunstleder usw. alternativ das Filmscharnier 120 für die Thoraxbagabdeckung 118. Vorteile dieser Ausführung sind geringere Kosten und hochwertigeres Aussehen.

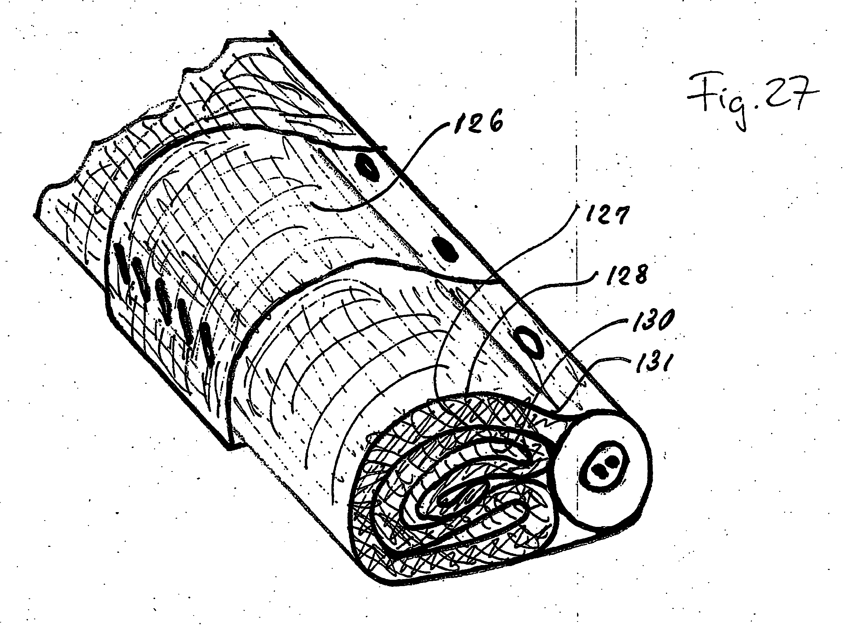

Die Fig. 27 zeigt perspektivisch als Beispiel das "Package" eines heutigen Thoraxbags 125. Nach der Faltung des Thoraxbags 125 in gerollter Form, wie gezeigt, oder in Falten wird dieser mit einer Manschette 126 gehalten.Durch die Eigenspannung des Gewebes 127 entsteht immer ein "Buckel" 128 in der Mitte. Hierdurch kann man diese Bagform 129 nicht in einer Kunststoffschale 116 verwenden. Auch die immer öfter verwendeten "Softbags" 130 d.h. Airbags mit einer weichen Hülle 131 sind vorteilhafter ohne einen "Buckel" unterzubringen.

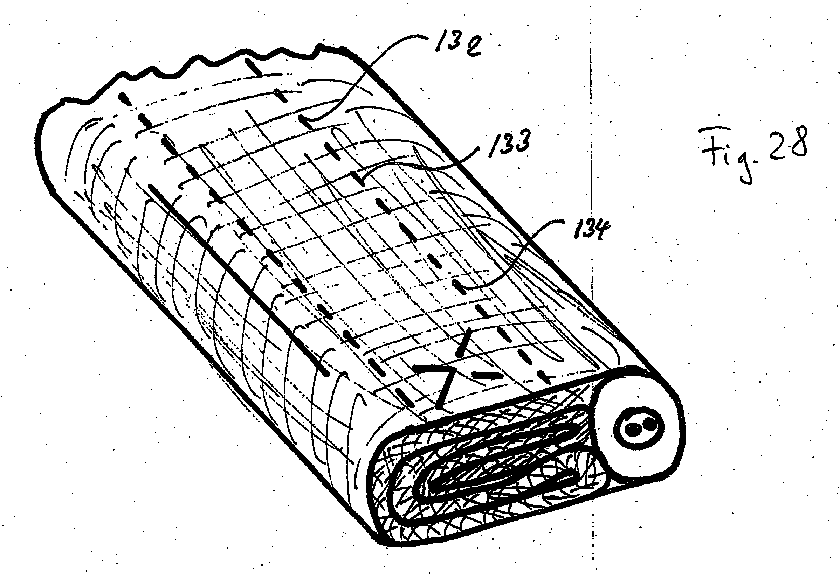

Die Fig. 28 zeigt die Lösung des Packageproblems mit dem "Buckel" 128. Der gefaltete oder gerollte Softbag 130 wird mit einem schwachen Faden 132 und großer Stichlänge 133 einfach oder mehrfach, je nach bedarf, "platt" genäht. Beim Crash wird diese Reißnaht 134 problemlos zerrissen. Das spart die Manschette 126 zum Halten der Faltung und die Hülle 131, auch "Soft-Cover" genannt.

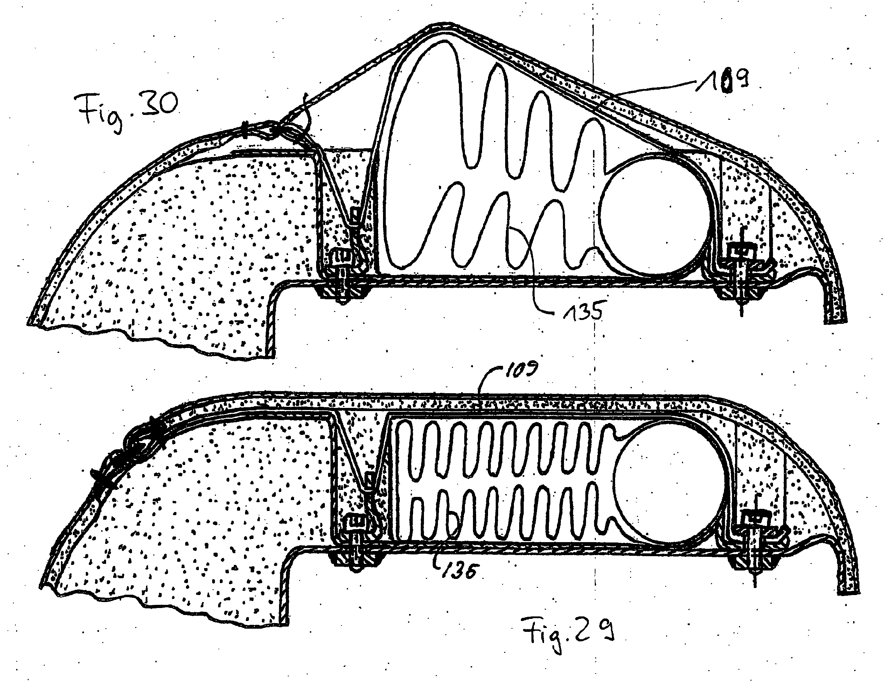

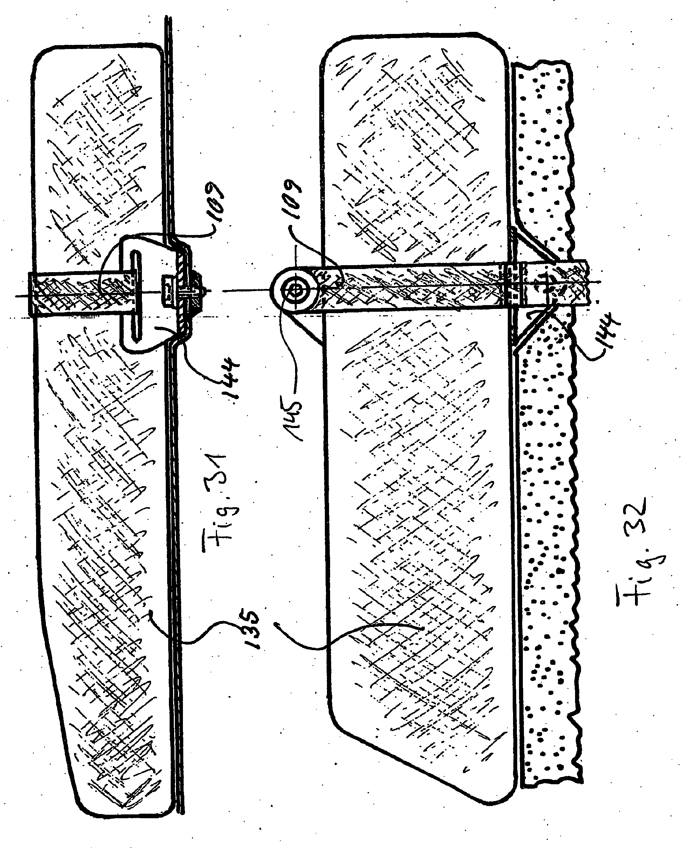

In der Fig. 29 wird eine weitere Alternative der Kombination Reißbandtechnik mit einem "Softcover-Modul" 135 gezeigt. Da das Softcover-Modul 135 keinen Deckel hat, muss das Reißband 109 vorne mit einer Umlenkung 144 versehen werden. Das Reißband 109 wird dann hinter dem Modul separat oder mit dem Softcover-Modul 135 z.B. elektronisch Drehmoment kontrolliert verschraubt. Die Fig. 30 zeigt die Funktion beim Crash. Die Fig. 31 zeigt das "Softcover-Modul" 135 mit dem Reißband 109 und der Umlenkung 144 in der Seitenansicht. Die Fig. 32 zeigt das Softcover-Modul 135 mit Reißband 109, Umlenkung 144 und die gemeinsame Befestigung 145 vom Reißband 109 und dem Softcover-Modul 135. Für die Reißbandtechnik ist es günstig , wenn der Airbag 111 zuerst im Mittelbereich aufgeblasen wird.

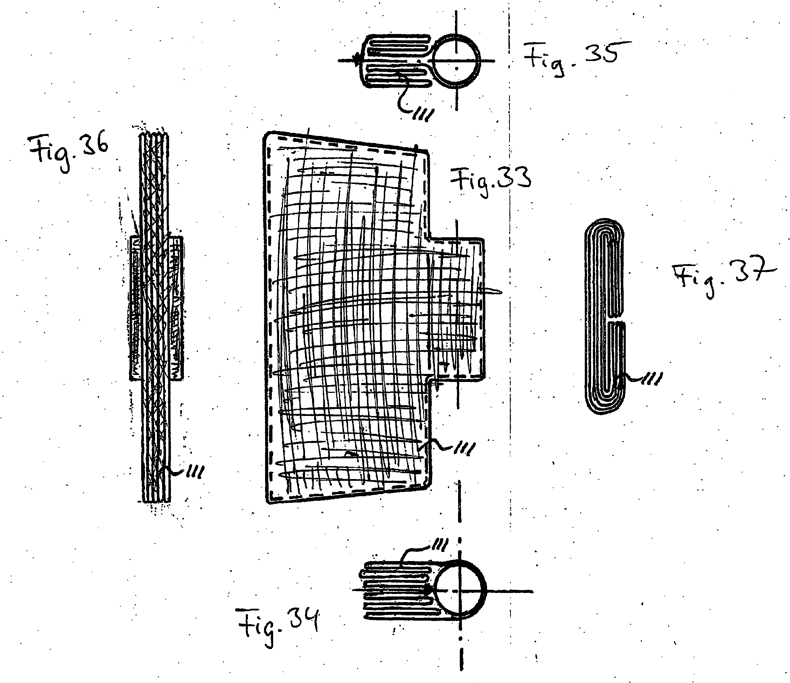

Weiter ist es günstig, wenn Airbags 111 gefaltet werden wie in der Fig. 34 und alternativ in der Fig. 35 gezeigt ist Damit wird der Airbag 111 nicht geschoben, sondern weniger aggressiv und schneller gezogen. Der in der Fig. 33 gezeigte Airbag 111 in nicht gefalteter Art wird dann, wie in den Fig. 34 oder 35 gefaltet und sieht dann von vorne aus, wie in der Fig. 36 gezeigt ist. Danach wird das Ober- und Unterteil beigeklappt, wie in der Fig. 37 gezeigt ist. Der so gepackte Airbag 111 kann oben und unten erst entfalten, wenn der Mittelteil sich weitgehend entfaltet hat. Das Durchbrechen durch das in die Aufreißnaht 136 gerissene Loch (nicht gezeigt) wird so effektiver nach oben und unten vergrößert. Natürlich können auch nur das Ober- oder Unterteil oder beide gegenläufig beigefaltet werden. Selbstverständlich ist es sinnvoll, den Airbag 111 in dieser Form mit schwachen Fäden 132 zu fixieren (beschrieben im Zusammenhang mit der Fig. 28).

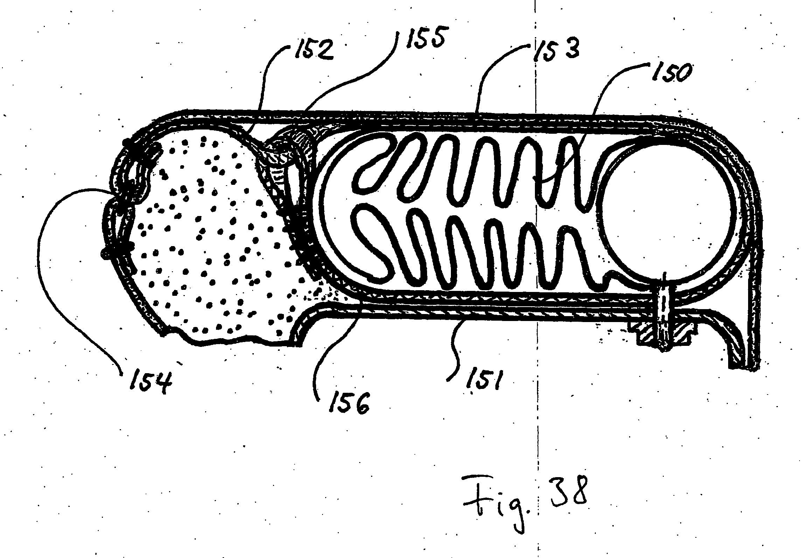

Die Fig. 38 zeigt eine weitere Alternative der Anwendung eines Reißbandes 152 zur problemlosen Öffnung der Airbagaufreißnaht 154. Wie in den bisherigen Alternativen wird das Reißband 152 zur Airbagaufreißnaht 154 beigenäht. Neu ist die Umlenkung des Reißbandes 152, die in diesem Fall eine Umlenkschlaufe 155 aus weichem Material, z.B. Textil ist. Dieses Textil kann alternativ ein Band sein. Die Umlenkschlaufe 155 kann alternativ das andere Ende des Reißbandes 152 sein. In dem hier gezeigten Beispiel wird das Reißband 152 durch seine eigene Umlenkschlaufe 155 gesteckt und bildet damit eine große Schlaufe 156, durch die das Airbagmodul 150 zur Montage gesteckt und dann mit dem Reißband 152 verschraubt wird.

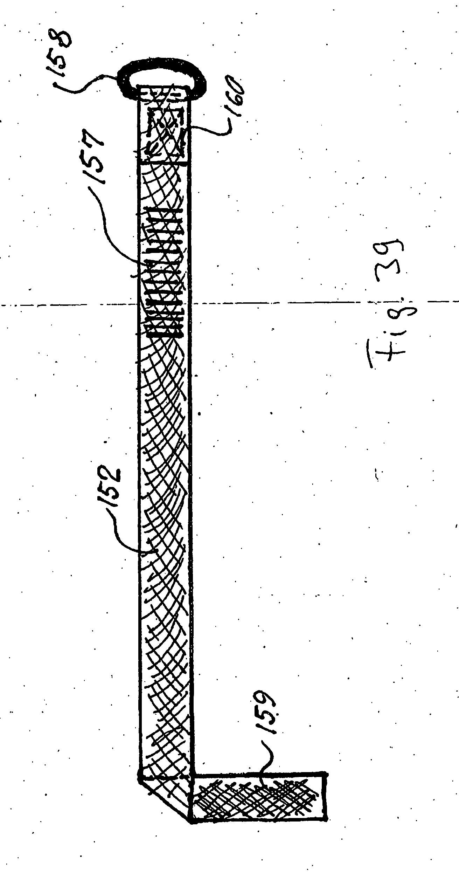

Ergänzend zu der Fig. 38 wird bei dem Ausführungsbeispiel der Fig. 39 eine weitere Alternative des beigenähten Reißbandes 159 gezeigt. Statt der kleinen Schlaufe, der Umlenkschlaufe 155 ist hier ein Kettenglied 158 eingenäht, das einen reibungsärnieren Durchlauf des Reißbandes 152 gewährleistet. Der aufgedruckte Barcode 157 dient der Lagepositionierung, wie später noch im Zusammenhand mit anderen Ausführungsbeispielen beschrieben wird.

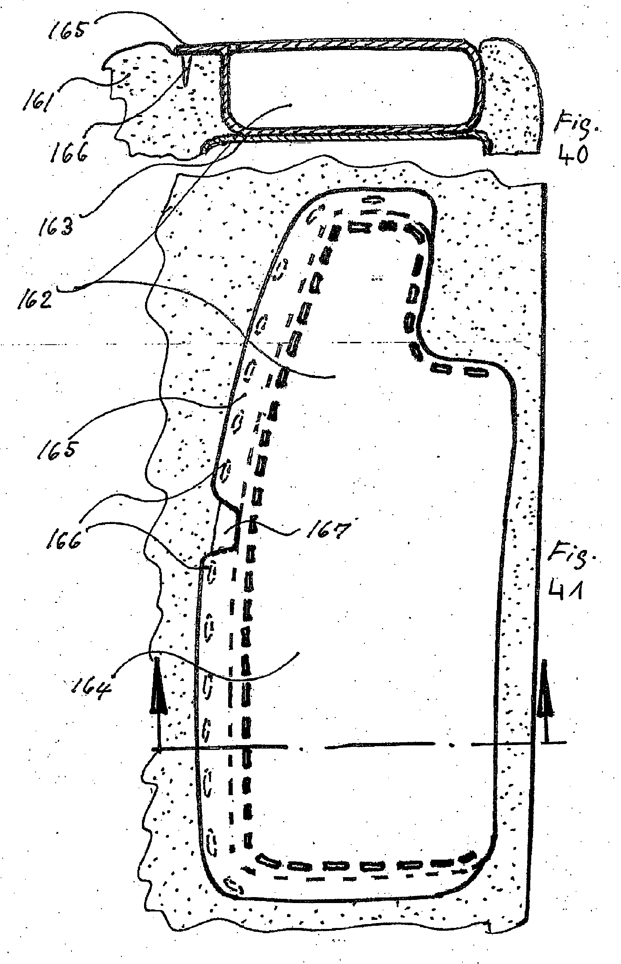

Unter Bezugnahme auf die Fig. 40 und 41 ist es bei im Schaum 161 eingebetteten Airbagmodulen 162 vorzugsweise in Sitzlehnen 163 üblich, dass man Schaumbrockenflug verhindern muss, der beim Austritt des Airbags entsteht. Hierzu ist es üblich, ein Gittergewebe im Schaum 161 zu integrieren oder einen textilen Lappen am Sitzbezug anzunähen und unter dem Airbagmodul 162 tzu befestigen. Die Erfindung integriert stattdessen einen "Rand" 165 am Modulkasten 164, wie in den Fig. 40 und 41 gezeigt ist. Dieser Rand 165 druckt beim Air-bagaustritt den Schaum 161 nach unten und verhindert damit dessen Wegbrechen. Ergänzend kann dieser Rand 165 mit Krallen 166 versehen werden, die den Schaum 161 noch besser festhalten, Eine Unterbrechung 167 des Randes sorgt in vorteilhafter Weise für eine Führung bzw. Positionierung des Reißbandes (in vorherigen Kapiteln beschrieben).

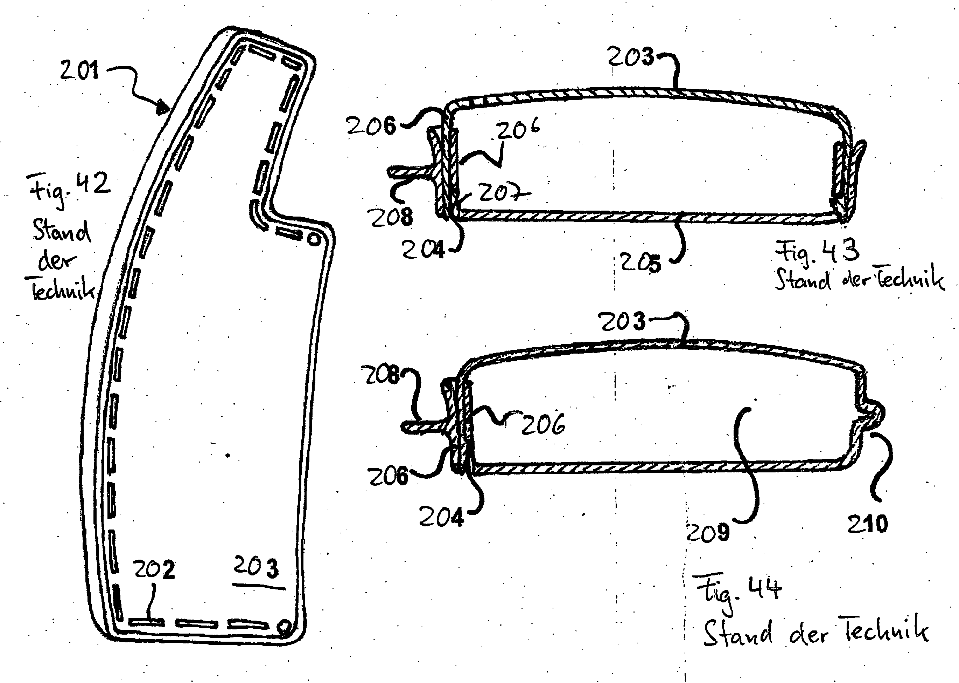

Die Fig. 42 zeigt in der Draufsicht eine heute übliche Ausführung eines Modulkastens 201 mit Sollbruchstellen 202 im Deckel 203 für den Austritt des Bags (nicht gezeigt), also Stand der Technik. Die Fig. 43 zeigt dazu einen typischen Schnitt durch den Modulkasten 201. Er besteht aus einem Deckel 203 mit etwa 13 Haken 204, die im Boden 205 des Modulkastens 201 zwischen zwei Wänden 206, die entsprechende Aussparungen aufweisen, eingeklipst sind. Wegen der notwendigen hohen Haltekraft ist vorne eine Verstärkungsleiste 208 angegossen. Die Fig 44 zeigt dazu ferner im Scnnitt eine weitere Alternative. Dies ist ein sogenanntes "Schmetterlingsmodul" 209, weil der Deckel 203 und der Boden 205 mit einem Filmscharnier 210 verbunden sind. Der Modulkasten 201 wird zusammengeklappt und vorne wie zu der Fig. 43 beschrieben ist, verrastet. Das Bezugszeichen 207 bezeichnet Aussparungen.

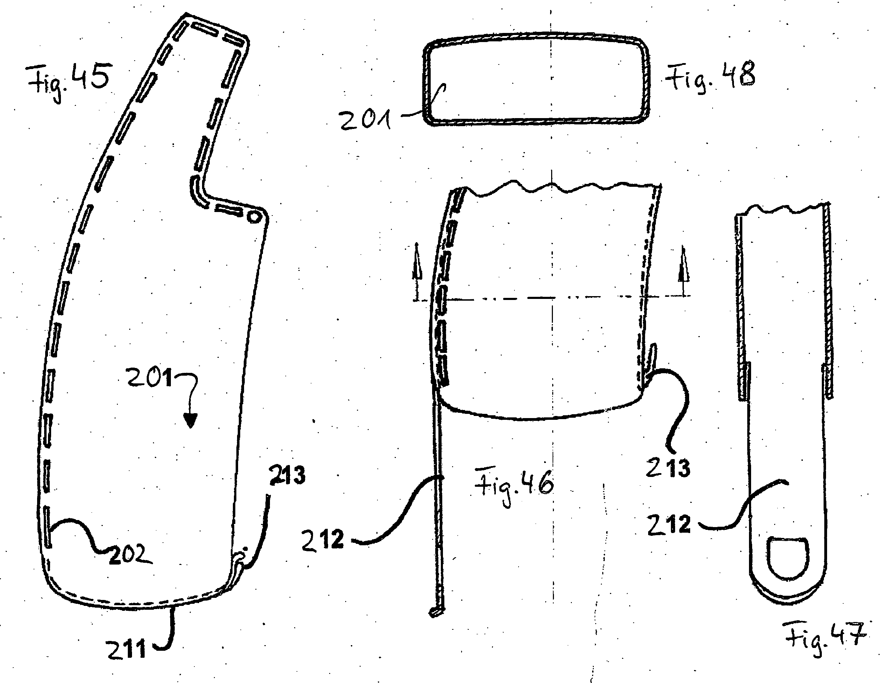

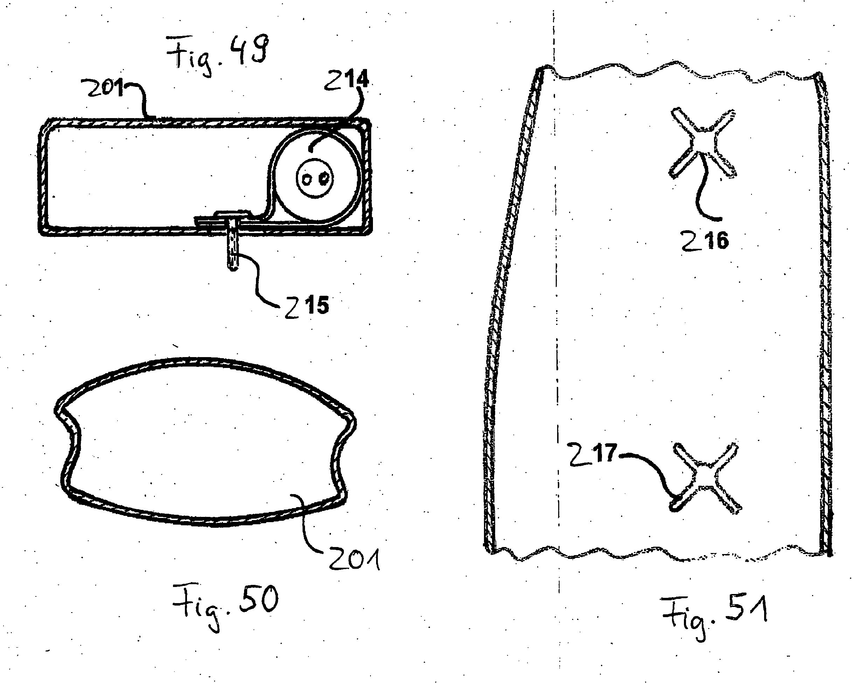

Die Fig. 45 bis 51 zeigen dagegen ein Ausführungsbeispiel der vorliegenden Erfindung. Die Fig. 45 zeigt einen nach unten offenen Modulkasten 201, der aus einem Stück gespritzt wird. Die Fig. 46 zeigt, dass seitlich der unteren Öffnunfg 211 eine Lasche 212 angespritzt ist, die nach dem Einschieben des Airbagmodul-Zusammenbaus (nicht gezeigt) in einen gegenüber liegenden Haken 213 eingehängt wird und damit den Modulkasten 201 verschließt. Die Fig. 47 zeit die Lasche 212 in der Seitenansicht. Selbstverständlich kann die Lasche 212 alternativ ersetzt werden durch einen separaten Deckel (nicht gezeigt) und kann auch anders befestigt werden. Die Fig. 48 zeigt einen Schnitt durch den Modulkasten 201, der keine dreifachen Wände 206 mehr benötigt. Die Fig. 49 zeigt einen im Modulkasten 201 montierten Airbaggenerator 214 mit seinen Gewindebolzen 215 oder Haken (nicht gezeigt). Die Fig. 50 zeigt, dass man den einstitckigen Modulkasten 201 oval drücken muss, um den Airbagzusammenbau mit seinen Befestigungen einschieben zu können. Damit man die Durchgangslöcher 216 im Modulkasten 201 leichter findet, ist deren Umgebung vorzugsweise mit Schlitzen 217 versehen (Fig. 51). Andere Ausführungen sind ebenso naheliegend.

Zusammenfassend wird mit der vorstehend und in den Fig. 42 bis 51 erläuterten Version des Airbagsystems angestrebt und erreicht, die Ausmaße eines Sitzairbagmoduls klein zu halten. Seine Dicke bestimmt die Schaumdicke und die Sitzbreite. Weiter lässt sich ein rundum glattflächiges Gehäuse besser in der dafür vorgesehenen Aussparung im Schaum unterbringen. Mit dem erfindungsgemäßen Airbag-Modul-Behälter insbesondere für Sitze gemäß dem Ausführungsbeispiel nach den Fig. 42 bis 51 werden unter anderem folgende Vorteile erzielt:
1. Kleinere Abmessungen und daraus folgend geringeres Gewicht und geringere Kosten, auch für den Schaum der Sitzlehne.
2. Besseres Raumangebot für die tendenziell größer werdenden Airbags.
3. Bessere Passung des rundum glatten Gehäuses im Schaum.
4. Beispielsweise bedeutet dies z.B. 80g Gewichtseinsaprung allein beim Modulkasten, sowie gegebenenfalls eine z.B. 8 mm schmalere Sitzlehne und eine bessere Passung des Modulkastens im Schaum.

Solche erfindungsgemäße "One-Piece"-Hardcover-Module sind gegenüber solchen Modulen des Standes der Technik, wobei beim Seitenairbag-Modulgehäuse Boden und Deckel zusammen gesteckt werden, was hinten und vorne 3-fache Wandstärke bedeutet, oder wobei der Deckel und der Boden aus einem Stück und mit einem Filmscharnier miteinander verbunden sind und nur vorne verclipst werden. Dagegen wird ein "One-Piece"-Hardcover-Modul gemäß der vorliegenden Erfindung von unten mit einer angespritzten Lasche verschlossen. Das spart Volumen und entsprechende Gewicht. Damit könnte die Sitzbreite um einige mm verringert werden. Weiter lässt sich das fast rundum glatte Modul besser in die Schaumöffnung einpassen. Vorzugsweise wird zur Montage des Zusammenbaus Airbagsystem das Gehäuse oval gedrückt. Zum besseren Finden der Löcher für Bolzen oder Haken werden diese Löcher bevorzugt mit Schlitzen umgeben. Hinterschnitte in der Wandstärke sollten nur am Innen- oder Auβenwerkzeug angebracht werden, da das Gehäuse nach der Öffnung einer Werkzeugseite "flexibel" ist. Hinterschnittfreie Werkzeugauslegung: Die Lasche zur Verhakung entspricht der heute üblichen Technik. Die Verhakung ist an der Stelle platziert, an der sie gleichzeitig als Auflage für das Reißband dient.

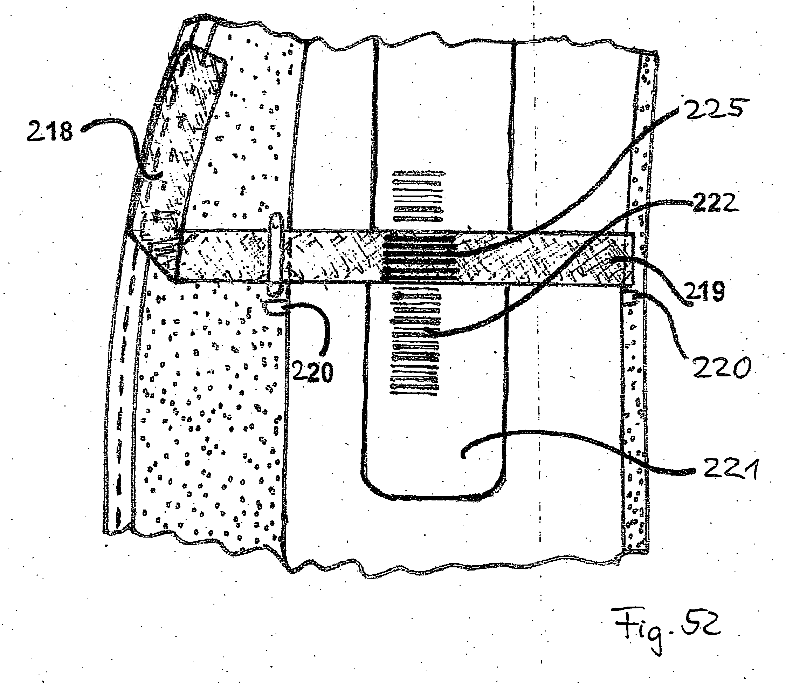

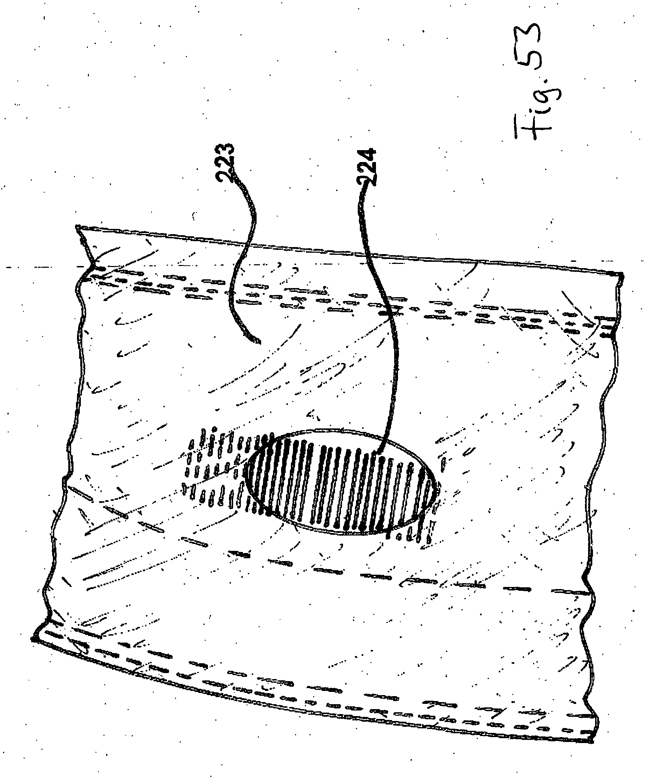

Ein bisher beschriebener oder auch anderer Modulkasten 201 wird, wie in der Fig. 52 erkennbar ist, bei einem weiteren Ausführungsbeispiel gemäß den Fig. 52 und 53 in einer ersten Alternative von einem Reißband 218 umhüllt in Form einer Schlaufe 219. Diese Schlaufe 219 wird auf Haltenasen 220 aufgelegt. In der Praxis ist es häufig wünschenswert oder sogar erforderlich, dass dabei zertifiziert, d. h. garantiert werden muss, dass die Schlaufe 219 verlegt und auch an der richtigen Stelle montiert wird. Die Erfindung schlägt entsprechend dem Ausführungsbeispiel in den Fig. 52 und 53 vor, dass ein üblicher oder normaler Aufklebezettel 221 genau positioniert wird (beispielsweise durch einen Fertigungsroboter) und mit einem Barcode 222 versehen wird. Richtig verlegt, deckt die Schlaufe 219 eine bestimmt Fläche des Barcodes 222 ab. Das wird mit einem Barcode-Leser abgefragt und einer Datenerfassung mitgeteilt. Hierbei ist es sinnvoll, dass die ebenso notwendige Abfrage der Daten und die Positionserkennung im gemeinsamen Barcode 222 enthalten sind und auch gemeinsam abgefragt werden. Die Schlaufe 219 hat ebenso an der Stelle passend zum Barcode auf dem Modul einen Barcode 225. Dieser Barcode 225 stellt sicher, dass die Schlaufe 219 richtig in horizontaler Richtung und nicht verdreht eingebaut wird. Auch eine Fehlverbauung rechts zu links wird damit ausgeschlossen. Die Fig. 53 zeigt eine weitere Alternative dieser Technik. Heute werden häufig Airbagmodule für Sitze in eine Manschette 223 geschoben. Eine aufwendige Videoüberwachung führt zu einer oft fehlerbehafteten Zertifizierung. Die beschriebene Barcode-Technik wird hier ebenfalls angewendet. Ein an einer vorbestimmten Stelle positioniertes Loch in der Manschette 223 gibt den gewünschten Barcode-Ausschnitt 224 frei.

Nachfolgend werden noch einige Vorteile eines erfindungsgemäßen Airbagsystems mit einem Reißbandsystem mit einem Hardcover-Modul und einer Reissbandschlaufe angegeben. Dabei öffnet ein Reißband eine ungeschwächte Naht mit geringer Kraft an vorbestimmter Stelle. Das bringt folgende Vorteile:
1. Die Nähte brauchen nicht abgestimmt zu werden. Garn- und Nahtfestigkeiten mit einer Abweichung von über 100 % haben keinen Einfluss. Eine Verriegelung der Naht ist ebenso nicht merkbar, da sie in der Festigkeit weit von 1000 N entfernt ist. Dies ist in Versuchsreihen bewiesen worden und kann einfachst am Schraubstock nachvollzogen werden.
2. Die Dehnung der Bezugsstoffe spielt ebenso keine Rolle, da sie immer weit über der Dehnung des Reißbandes liegt. Dehnungsfreudigere Stoffe sind einfacher und faltenfreier zu beziehen und kosten meistens weniger.
3. Schaumbrockenflug findet nicht statt, da die vordere Wand des Moduls den Schaum abdeckt. Versuche haben das bewiesen.
4. OOP- ("Out of Position"-) Verhalten ist günstig: Es ist logisch, dass ein Airbag aus einer 1000 N festen Naht aggressiver herausplatzt, als aus einer 100 - 200 N festen Naht. Au-βerdem kann die Austrittsstelle auf OOP abgestimmt werden, d. h. diese Stelle ist dort, wo z.B. der Dummy weniger Verletzungspotential hat.
5. Das Crashverhalten ist verbessert, da die Seitenwand die Austrittsfläche des Bags verkleinert. Logisch ist, dass ein Bag, der sich durch einen Spalt zwängen muss und auf eine Nahtfestigkeit von 1.000 N trifft es schwerer haben wird auszutreten, als ein Bag, der auf eine Nahtfestigkeit von 100 bis 200 N trifft. Außerdem entsteht durch den "Flaschenzugeffekt" doppelter Bandeinzugsweg, d. h. bereits nach halbem Weg des Bags ist die Naht offen verglichen mit der Manschette.
6. Bei Produkthaftungsfällen geht man in den USA davon aus, dass dem Kunden das bestmögliche Produkt fehlerfrei angeboten werden muss. Das vorliegende System kann als bestes bewiesen werden. Eine nicht beabsichtigte Fehlverbauung ist auszuschließen. Das Manschettensystem ist problematischer.
7. Zertifizierung der korrekten Montage: Beim ReiBbandsystem mit Schlaufe wird das Modul in die Schlaufe gesteckt und die Schlaufe anliegend an Positioniemasen festgezogen. Das Reissband kommt dabei über dem Barcode des Moduls zu liegen. Dieser Barcode enthält außer den schon heute üblichen Daten eine Positionserkennung des Bandes. Weiter ist das Reißband ebenso in der Position passend zur Barcode des Modules mit einem eigenen Barcode versehen, der sichcrstellt, dass die Schlaufe horizontal richtig positioniert und nicht verdreht und nicht zwischen rechts und links vertauscht wurde. Bei richtiger Montage liegen beide Barcodes überkreuz aufeinander mit der vorgegebenen Toleranz und werden gemeinsam abgefragt Die anderen üblichen Daten werden ebenso gleichzeitig damit abgefragt, so dass kein Mehraufwand entsteht.
8. Das Airbagsystem bleibt dabei weitgehend unangetastet. Versuche zeigen, dass der Bag an vorbestimmter Stelle mit einer "Spitze" austritt und dann die Naht nach oben und unten aufreißt. Bei Neuentwicklungen sollte man evtl. darauf achten, dass die Entfaltung bevorzug "in" der Schlaufe des Reißbandes beginnt. Das war bisher nicht notwendig, stellt aber ein weiteres Optimierungspotential dar. Bei einem von 5 untersuchten Airbagmodultypen musstc bisher eine der Überströmöffnungen geschlossen bzw. müsste verlegt werden, da der erste Druckanstieg hinter dem Reißband zum Abblasen des Gases führte. Die Entwicklungsaufgaben sind einfacher und mit besserem Ergebnis und damit mit geringerem Kostenaufwand lösbar. Gleiches gilt für die aufkommenden Änderungswünsche der OEMs während des Produktionszeitraumes.

Zusammenfassend betrifft die vorliegende Erfindung insbesondere ein Airbagsystem und speziell ein Öffnungssystem für Airbags, die aus einer vernähten Abdeckung austreten. Vorteilhaft ist dabei ein gemeinsames Befestigen dieses Systems und des Moduls zur Sicherstellung, dass beides zertifiziert montiert ist. Besondere Vorteile sind, dass es sich um ein kostensparendes System handelt, bei dem ein in die Aufreißnaht beigenähtes Reißband das heute übliche eingenähte Verstärkungsgewebe, auch Manschette genannt, und die übliche Schwächung der Airbagnaht einspart. Ein weiterer Vorteil besteht in dem Befestigungssystem des Reißbandes in Kombination mit dem Modul, das ohne Mehraufwand eine elektronisch überprüfbare und damit zertifizierbare Befestigung zulässt. Weitere Ausführungsbeispiele sind angegeben zur Optimierung und als Varianten der Funktion eines Thoraxairbags mit dem Fokus auf sichere zertifizierbare Montage, besseres Aussehen, bessere Funktion und geringere Kosten.

**Bezeichnungen**

| | | | |
|---|---|---|---|
| 1 | Sitzlehne | 33 | Schlitz |
| 2 | Bezugsstoff | 34 | Sitzlehne |
| 3 | Reißband | 35 | Mutter |
| 4 | Schraube | 36 | Airbag |
| 5 | Beilagescheibe | 37 | Umlenkung |
| 6 | Airbagmodul | 38 | Airbagaufreißnaht |
| 7 | Dom | 39 | Aussparung |
| 8 | Durchgangsloch | 40 | Airbagmoduls |
| 9 | Modulboden | 41a | Loch |
| 10 | Deckel | 41b | Loch |
| 11 | Durchgangsloch | 42 | Dom |
| 12 | Verstärkung | 43 | Annähung |
| 13 | Gewindemutter | 51 | Airbagmodul |
| 14 | Sitzlehnenmhmen | 52 | Softcover |
| 15 | Umlenkung | 53 | Loch |
| 16 | Airbag | 54 | Verstärkung |
| 17 | Airbagaustrittsnaht | 55 | Blech |
| 18 | Verbindung | 56 | Haken |
| 19 | Befestigung | 57 | Loch |
| 20 | Umlenkung | 58 | Generator |
| 21 | Gasleitblech | 109 | Reißband |
| 21a | Gasaustritt | 111 | Airbag |
| 21b | Befestigung der Kartusche | 115 | Sporlsitz |
| 22 | Haken | 116 | Kunststoffschale |
| 23 | Einhängeschlitz | 117 | Bezug aus Leder, Kunstleder usw. |
| 24 | Loch | 118 | Thoraxairbagabdcckung |
| 25 | Nocken | 119 | Sollbruchstelle |
| 26 | Reißband | 120 | Filmscharnier |
| 27 | Sitzbezug | 121 | schraffierter Bereich |
| 28 | Boden | 122 | Airbagmodul |
| 29 | Moduldeckel | 123 | Kcder |
| 30 | Schraube | 124 | U-förmige Abstellung |
| 31 | Unterboden | 125 | 125 Thoraxbag |
| 32 | Umlenkblech | 126 | 126 Manschette |
| 127 | Gewebe | 166 | Krallen |
| 128 | "Buckel" | 167 | Unterbrechung |
| 129 | Bagform | 201 | Modulkasten |
| 130 | Softbag | 202 | Sollbruchstellen |
| 131 | Hülle Softcover | 203 | Deckel |
| 132 | schwacher Faden | 204 | Haken |
| 133 | Stichlänge | 205 | Boden |
| 134 | Reißnaht | 206 | Wände |
| 135 | Softcover-Modul | 207 | Aussparungen |
| 143 | Ahufsatz | 208 | Verserkungsleiste |
| 144 | Umlenkung | 209 | Schmetterlingwnodul |
| 145 | Befestigung | 210 | Filmschamier |
| 150 | Airbagmodul | 211 | Öffnung |
| 151 | Sitzlehne | 212 | Lasche |
| 152 | Reißband | 213 | Haken |
| 153 | Sitzbezug | 214 | Airbaggenerator |
| 154 | Airbagaufreißnaht | 215 | Gewindebolzen |
| 155 | Umlenkschlaufe | 216 | Durchgangslöcher |
| 156 | große Schlaufe | 217 | Schlitze |
| 157 | Barcode | 218 | Reissband |
| 158 | Kettenglied | 219 | Schlaufe |
| 159 | beigenähtes Reißband | 220 | Haltenasen |
| 160 | Vemähung | 221 | Aufklebezettel |
| 161 | Schaum | 222 | Barcode am Modul |
| 162 | Airbagmodule | 223 | Manschette |
| 163 | Sitzlehnen | 224 | Barcode-Ausschnitt |
| 164 | Modulkasten | 225 | Barcode am Band |
| 165 | Rand | | |

## Patentansprüche

1. Fahrzeugsitz, der einen Bezug (2, 27, 117, 153) aufweist und ein Airbagsystem (40, 51) mit einem Airbagmodul (6, 40, 51, 122, 150, 162) beherbergt,
**dadurch gekennzeichnet,**
**dass** das Airbagsystem (40, 51) ferner eine integrierte Öffnungstechnik (3, 26, 109, 152, 159) für den Bezug (2, 27, 117, 153) enthält, und dass die integrierte Öffnungstechnik automatisch gleichzeitig mit dem Airbagmodul an dem Fahrzeugsitz befestigt ist.

2. Fahrzeugsitz nach Anspruch 1,
**dadurch gekennzeichnet,**
**dass** das Airbagmodul (6, 40, 51, 122, 150, 162) einen Deckel (10, 29) hat, und dass der Deckel (10, 29) des Airbagmoduls (6, 40, 51, 122, 150, 162) einen Durchgang (11) für die Anbindung eines Reißmittels (3, 26, 109, 152, 159) der Öffnungstechnik zum Öffnen einer Airbagaufreißnaht (17, 38, 134, 154) des Bezuges (2, 27, 117, 153) zum Austritt eines Airbags (16, 36, 111) des Airbagmoduls (6, 40, 51, 122, 150, 162) hat.

3. Fahrzeugsitz nach Anspruch 1 oder 2,
**dadurch gekennzeichnet,**
**dass** das Airbagmodul (6, 40, 51, 122, 150, 162) einen Deckel (10, 29) hat,
**dass** der Deckel (10, 29) des Airbagmoduls (6, 40, 51, 122, 150, 162) eine Verstärkung (12, 54, 208) an seiner Vorderkante hat, und
**dass** die Verstärkung (12, 54, 208) während der Airbagentfaltung als Umlenkung für ein Reißmittel/Reißband (3, 26, 109, 152, 159) dient und dieses anhebt bzw. umlenkt und damit aus einer Airbagaufreißnaht (17, 38, 134, 154) des Bezuges (2, 27, 117, 153) reißt.

4. Fahrzeugsitz nach einem der vorhergehenden Ansprüche,
**dadurch gekennzeichnet,**
**dass** für eine Airbagaufreißnaht (17, 38, 134, 154) des Bezuges (2, 27, 117, 153) zum Austritt eines Airbags (16, 36, 111) des Airbagmoduls (6, 40, 51, 122, 150, 162) Reißmittel vorgesehen sind, die als gewebtes Band oder insbesondere gewebtes Formstück zur Bildung eines Reißbandes (3, 26, 109, 152, 159) gestaltet sind.

5. Fahrzeugsitz nach Anspruch 4,
**dadurch gekennzeichnet,**
**dass** das Reißband (3, 26, 109, 152, 159) in T-Form eingenäht ist, um ein möglichst großes Loch in der Airbagaufreißnaht (17, 38, 134, 154) des Bezuges (2, 27, 117, 153) zu reißen, oder
**dass** das Reißband (3, 26, 109, 152, 159) V-förmig eingenäht ist, um eine größere Schälwirkung in der Airbagaufreißnaht (17, 38, 134, 154) des Bezuges (2, 27, 117, 153) zu erzielen, oder
**dass** das Reißband (3, 26, 109, 152, 159) X-förmig eingenäht ist, um durch einen Fügefaden ein großes Loch und Durchtritt an der Airbagaufreißnaht (17, 38, 134, 154) des Bezuges (2, 27, 117, 153) zu erreichen.

6. Fahrzeugsitz nach Anspruch 4 oder 5,
**dadurch gekennzeichnet,**
**dass** das Reißband (3, 26, 109, 152, 159) nur mit der Fügenaht vernäht ist, um geringe Außreißkräfte an der Airbagaufreißnaht (17, 38, 134, 154) des Bezuges (2, 27, 117, 153) zu erreichen, oder
**dass** das wenigstens ein Reißband (3, 26, 109, 152, 159) dort vernäht ist, wo ein Airbag (16, 36, 111) des Airbagmoduls (6, 40, 51, 122, 150, 162) zuerst durch die Airbagaufreißnaht (17, 38, 134, 154) des Bezuges (2, 27, 117, 153) austreten soll.

7. Fahrzeugsitz nach einem der der vorhergehenden Ansprüche,
**dadurch gekennzeichnet,**
**dass** die Öffnungstechnik wenigstens ein Reißband (3, 26, 109, 152, 159) enthält, das derart gestaltet ist, dass während der Airbagentfaltung eine doppelt große Einzugslänge des Reißbandes (3, 26, 109, 152, 159) von einer Airbagaufreißnaht (17, 38, 134, 154) des Bezuges (2, 27, 117, 153) zum Austritt eines Airbags (16, 36, 111) des Airbagmoduls (6, 40, 51, 122, 150, 162) weg relativ zur Bewegung eines Deckels (10, 29) des Airbagmoduls (6, 40, 51, 122, 150, 162) ausgeführt wird, und
**dass** für diese Verdopplung des Einzugs eine flaschenzugartige Umlenkung vorgesehen ist.

8. Fahrzeugsitz nach einem der vorhergehenden Ansprüche,
**dadurch gekennzeichnet,**
**dass** ein Softcover (52, 130, 131) für das Airbagmodul (6, 40, 51, 122, 150, 162) enthalten und derart ausgeführt ist, dass es die Öffnungstechnik mit wenigstens einem Reißband (3, 26, 109, 152, 159) beinhaltet.

9. Fahrzeugsitz nach einem der vorhergehenden Ansprüche,
**dadurch gekennzeichnet,**
**dass** ein Softcover (52, 130, 131) für das Airbagmodul (6, 40, 51, 122, 150, 162) enthalten und derart ausgeführt ist, dass es für die Öffnungstechnik mit wenigstens einem Reißband (3, 26, 109, 152, 159) eine Reißbandführung bereitstellt, so dass bei einer Öffnung einer oberen Abdeckung des Airbagmoduls (6, 40, 51, 122, 150, 162) die doppelte Wegstrecke des wenigstens einen Reißbandes (3, 26, 109, 152, 159) eingezogen wird.

10. Fahrzeugsitz nach einem der vorhergehenden Ansprüche,
**dadurch gekennzeichnet,**
**dass** das Airbagmodul (6, 40, 51, 122, 150, 162) einen Modulkasten (164) enthält, der derart gestaltet ist, dass er eine Umlenkung und eine Befestigung wenigstens eines Reißbandes (3, 26, 109, 152, 159) der Öffnungstechnik aufnimmt.

11. Fahrzeugsitz nach einem der vorhergehenden Ansprüche,
**dadurch gekennzeichnet,**
**dass** eine hintere Sitzabdeckung vorgesehen und derart gestaltet ist, dass ein Deckel (10, 29) des Airbagmoduls (6, 40, 51, 122, 150, 162) nicht sichtbar integriert ist.

12. Fahrzeugsitz nach einem der vorhergehenden Ansprüche,
**dadurch gekennzeichnet,**
**dass** eine Reißbandumlenkung enthalten und derart gestaltet ist, dass sie ein flexibles Teil in Form einer Schlaufe (155) ist.

13. Fahrzeugsitz nach einem der vorhergehenden Ansprüche,
**dadurch gekennzeichnet,**
**dass** ein Airbagmodulkasten (164) aus einem Stück gefertigt und mit einer Montageöffnung vorgesehen ist.

14. Fahrzeugsitz nach Anspruch 13,
**dadurch gekennzeichnet,**
**dass** der Airbagmodulkasten (164) so gestaltet ist, dass die Montageöffnung an der Stelle ist, wo das Airbagmodul (6, 40, 51, 122, 150, 162) am breitesten ist.

15. Fahrzeugsitz nach Anspruch 13 oder 14,
**dadurch gekennzeichnet,**
**dass** der Airbagmodulkasten (164) einen Verschlussdeckel enthält und derart gestaltet ist, dass der Verschlussdeckel so ausgelegt ist, dass er eine Abstützwand bei der Airbagentfaltung darstellt, oder
**dass** der Airbagmodulkasten (164) derart gestaltet ist, dass der Verschlussdeckel eine angespritzte Lasche ist, die gegenüber befestigt wird, und dass die Lasche und der Airbagmodulkasten (164) so gestaltet sind, dass die Lasche am Airbagmodulkasten (164) eingehängt wird.

16. Fahrzeugsitz nach einem der Ansprüche 13 bis 15,
**dadurch gekennzeichnet,**
**dass** der Airbagmodulkasten (164) so gestaltet ist, dass er zum Einbau des Airbagmoduls (6, 40, 51, 122, 150, 162) und von Anbindeelementen in den Fahrzeugsitz oval verformbar ist.

17. Fahrzeugsitz nach einem der Ansprüche 13 bis 16,
**dadurch gekennzeichnet,**
**dass** eine Suchhilfe für eine Blindmontage von Anbindeelementen in einem Boden des Airbagmoduls (6, 40, 51, 122, 150, 162) in Form von Schlitzen vorgesehen ist.

18. Fahrzeugsitz nach einem der Ansprüche 13 bis 16,
**dadurch gekennzeichnet,**
**dass** Hilfsmittel (224) und ein Barcode (222) zur Überwachung der richtigen Montage der Hilfsmittel (224) vorgesehen und so angeordnet sind, dass die Lesbarkeit des Barcodes (222) von der richtigen Position der Hilfsmittel (224) und/oder des Airbagmoduls (6, 40, 51, 122, 150, 162) abhängt und die richtigen Position der Hilfsmittel (224) und/oder des Airbagmoduls (6, 40, 51, 122, 150, 162) durch die Lesbarkeit des Barcodes (222) bestätigbar ist.

19. Fahrzeugsitz nach Anspruch 18,
**dadurch gekennzeichnet,**
**dass** der Barcode (222) für die Überwachung der Öffnungstechnik mit wenigstens einem Reißband (3, 26, 109, 152, 159) gestaltet ist, oder
**dass** der Barcode (222) für die Überwachung einer Manschetten-Technik gestaltet ist.

20. Fahrzeugsitz nach einem der vorhergehenden Ansprüche,
**dadurch gekennzeichnet,**
**dass** ein Barcode (222) enthalten ist, der so gestaltet ist, dass Daten betreffend des Airbagsystems (40, 51), wie insbesondere Datum, Type und/oder Charge und/oder andere Daten, und/oder die Positionserkennung in dem Barcode (222) enthalten sind und vorzugsweise gleichzeitig von einem Leser abgefragt werden können.

21. Herstellungsverfahren für einen Fahrzeugsitz, der einen Bezug (2, 27, 117, 153) aufweist und ein Airbagsystem (40, 51) mit einem Airbagmodul (6, 40, 51, 122, 150, 162) unter dem Bezug (2, 27, 117, 153) beherbergt,
**dadurch gekennzeichnet,**
**dass** das Airbagsystem (40, 51) ferner eine integrierte Öffnungstechnik (3, 26, 109, 152, 159) für den Bezug (2, 27, 117, 153) enthält, und dass die integrierte Öffnungstechnik automatisch gleichzeitig mit dem Airbagmodul am Fahrzeugsitz befestigt wird.

## Claims

1. Vehicle seat, having a cover (2, 27, 117, 153) and housing an airbag system (40, 51) with an airbag module (6, 40, 51, 122, 150, 162),
**characterized**
**in that** said airbag system (40, 51) furthermore comprises an integrated opening technique (3, 26, 109, 152, 159) for said cover (2, 27, 117, 153), and in that said integrated opening technique being attached to the vehicle seat automatically simultaneously with said airbag module.

2. Vehicle seat according to claim 1,
**characterized**
**in that** said airbag module (6, 40, 51, 122, 150, 162) having a lid (10, 29), and in that said lid (10, 29) of said airbag module (6, 40, 51, 122, 150, 162) having a passage (11) for the connection of a tearing means (3, 26, 109, 152, 159) of said opening technique for opening an airbag tearing seam (17, 38, 134, 154) of said cover (2, 27, 117, 153) for the exit of an airbag (16, 36, 111) of said airbag module (6, 40, 51, 122, 150, 162).

3. Vehicle seat according to claim 1 or 2,
**characterized**
**in that** said airbag module (6, 40, 51, 122, 150, 162) having a lid (10, 29),
**in that** said lid (10, 29) of said airbag module (6, 40, 51, 122, 150, 162) having a reinforcement (12, 54, 208) at its front edge, and
**in that** during the airbag deployment said reinforcement (12, 54, 208) serves as a redirection for a tearing means/tearing ribbon (3, 26, 109, 152, 159) and lifts and redirects the latter, respectively, and thereby tears it out of an airbag tearing seam (17, 38, 134, 154) of said cover (2, 27, 117, 153).

4. Vehicle seat according to any of the preceding claims,
**characterized**
**in that** for an airbag tearing seam (17, 38, 134, 154) of the cover (2, 27, 117, 153) for the exit of an airbag (16, 36, 111) of said airbag module (6, 40, 51, 122, 150, 162) tearing means are provided, which are designed as a woven ribbon or especially a woven form piece so as to form a tearing ribbon (3, 26, 109, 152, 159).

5. Vehicle seat according to claim 4,
**characterized**
**in that** said tearing ribbon (3, 26, 109, 152, 159) is sewed in in T shape, so as to tear a hole as big as possible into said airbag tearing seam (17, 38, 134, 154) of said cover (2, 27, 117, 153), or
**in that** said tearing ribbon (3, 26, 109, 152, 159) is sewed in V shaped, so as to achieve a bigger shelling effect in said airbag tearing seam (17, 38, 134, 154) of said cover (2, 27, 117, 153), or
**in that** said tearing ribbon (3, 26, 109, 152, 159) is sewed in X shaped, so as to reach a big hole and passage at said airbag tearing seam (17, 38, 134, 154) of said cover (2, 27, 117, 153) via a joining thread.

6. Vehicle seat according to claim 4 or 5,
**characterized**
**in that** said tearing ribbon (3, 26, 109, 152, 159) only is sewed with the joining thread so as to reach diminished tearing forces at said airbag tearing seam (17, 38, 134, 154) of said cover (2, 27, 117, 153), or
**in that** said at least one tearing ribbon (3, 26, 109, 152, 159) is sewn there where an airbag (16, 36, 111) of said airbag module (6, 40, 51, 122, 150, 162) firstly should exit through said airbag tearing seam (17, 38, 134, 154) of said cover (2, 27, 117, 153).

7. Vehicle seat according to any of the preceding claims,
**characterized**
**in that** said opening technique comprises at least one tearing ribbon (3, 26, 109, 152, 159), which is designed such that during the airbag deployment a twice as big drawing-in length of said tearing ribbon (3, 26, 109, 152, 159) of an airbag tearing seam (17, 38, 134, 154) of said cover (2, 27, 117, 153) for exit of an airbag (16, 36, 111) of said airbag module (6, 40, 51, 122, 150, 162) being carried out away relative to the movement of a lid (10, 29) of said airbag module (6, 40, 51, 122, 150, 162),
and
**in that** a block and tackle kind redirection being provided for this doubling of the drawing-in.

8. Vehicle seat according to any of the preceding claims,
**characterized**
**in that** a soft cover (52, 130, 131) for said airbag module (6, 40, 51, 122, 150, 162) being comprised and made such that it includes said opening technique with at least one tearing ribbon (3, 26, 109, 152, 159).

9. Vehicle seat according to any of the preceding claims,
**characterized**
**in that** a soft cover (52, 130, 131) for said airbag module (6, 40, 51, 122, 150, 162) being comprised and made such that it provides for said opening technique with at least one tearing ribbon (3, 26, 109, 152, 159) a tearing ribbon guide such that when an upper cover of said airbag module (6, 40, 51, 122, 150, 162) being opened the double distance of way of said at least one tearing ribbon (3, 26, 109, 152, 159) being drawn-in.

10. Vehicle seat according to any of the preceding claims,
**characterized**
**in that** said airbag module (6, 40, 51, 122, 150, 162) comprises a module box (164), which is designed such that it receives a redirection and an attachment of at least one tearing ribbon (3, 26, 109, 152, 159) of said opening technique.

11. Vehicle seat according to any of the preceding claims,
**characterized**
**in that** a rear seat cover is provided and designed such that a lid (10, 29) of said airbag module (6, 40, 51, 122, 150, 162) being integrated non visibly.

12. Vehicle seat according to any of the preceding claims,
**characterized**
**in that** a tearing ribbon redirection being comprised and designed such that it is a flexible part in the form of a loop (155).

13. Vehicle seat according to any of the preceding claims,
**characterized**
**in that** an airbag module box (164) being provided as being made of one piece and with a mounting opening.

14. Vehicle seat according to claim 13,
**characterized**
**in that** said airbag module box (164) being designed such that said mounting opening being at a position where said airbag module (6, 40, 51, 122, 150, 162) having the biggest wide.

15. Vehicle seat according to claim 13 or 14,
**characterized**
**in that** said airbag module box (164) comprising a closing lid and being designed such that said closing lid being adapted to build a support wall during airbag deployment, or
**in that** said airbag module box (164) being designed such that said closing lid being an injected flap being attached opposite, and in that said flap and said airbag module box (164) being designed such that said flap being hooked at said airbag module box (164).

16. Vehicle seat according to any of claims 13 to 15,
**characterized**
**in that** said airbag module box (164) being designed such that it is deformable to be oval for assembly of the airbag module (6, 40, 51, 122, 150, 162) and of connecting elements into the vehicle seat.

17. Vehicle seat according to one of claims 13 to 16,
**characterized**
**in that** a seeking assistance for a blind mounting of connecting elements in the bottom of the airbag module (6, 40, 51, 122, 150, 162) in form of slots is provided.

18. Vehicle seat according to one of claims 13 to 16,
**characterized**
**in that** auxiliary means (224) and a barcode (222) for control of the correct mounting of said auxiliary means (224) being provided and arranged such that the readability of the barcode (222) depends from the correct position of said auxiliary means (224) and/or said airbag module (6, 40, 51, 122, 150, 162) and the correct position of said auxiliary means (224) and/or said airbag module (6, 40, 51, 122, 150, 162) being confirmable through the readability of said barcode (222).

19. Vehicle seat according to claim 18,
**characterized**
**in that** said barcode (222) being designed for the control of said opening technique with at least one tearing ribbon (3, 26, 109, 152, 159), or
**in that** said barcode (222) being designed for the control of a sleeve technique.

20. Vehicle seat according to any of the preceding claims,
**characterized**
**in that** a barcode (222) being comprised which is designed such that data concerning the airbag system (40, 51), as especially datum, type and/or lot and/or other data, and/or the position recognition are included in said barcode (222) and are preferably simultaneously retrievable by a reader.

21. Method for production of a vehicle seat having a cover (2, 27, 117, 153) and an airbag system (40, 51) with an airbag module (6, 40, 51, 122, 150, 162) housed under said cover (2, 27, 117, 153),
**characterized**
**in that** said airbag system (40, 51) furthermore comprises an integrated opening technique (3, 26, 109, 152, 159) for said cover (2, 27, 117, 153), and in that said integrated opening technique being attached to the vehicle seat automatically simultaneously with said airbag module.

## Revendications

1. Siège de véhicule, qui comprend une housse (2, 27, 117, 153) et abrite un système d'airbag (40, 51) avec un module d'airbag (6, 40, 51, 122, 150, 162),
**caractérisé en ce que**
le système d'airbag (40, 51) contient en outre un mécanisme d'ouverture intégré (3, 26, 109, 152, 159) pour la housse (2, 27, 117, 153), et **en ce que** le mécanisme d'ouverture intégré est fixé automatiquement simultanément avec le module d'airbag sur le siège de véhicules.

2. Siège de véhicule selon la revendication 1,
**caractérisé en ce que** le module d'airbag (6, 40, 51, 122, 150, 162) possède un couvercle (10, 29), et **en ce que** le couvercle (10, 29) du module d'airbag (6, 40, 51, 122, 150, 162) possède une traversée (11) pour la liaison d'un organe d'arrachement (3, 26, 109, 152, 159) du mécanisme d'ouverture afin d'ouvrir une couture d'arrachement (17, 38, 134, 154) de la housse (2, 27, 117, 153) pour la sortie d'un airbag (16, 36, 111) du module d'airbag (6, 40, 51, 122, 150, 162).

3. Siège de véhicule selon la revendication 1 ou 2,
**caractérisé en ce que** le module d'airbag (6, 40, 51, 122, 150, 162) possède un couvercle (10, 29),
**en ce que** le couvercle (10, 29) du module d'airbag (6, 40, 51, 122, 150, 162) possède un renforcement (12, 54, 208) à sa bordure antérieure, et **en ce que** le renforcement (12, 208) sert pendant le déploiement de l'airbag de déviation pour un organe/ruban d'arrachement (3, 26, 109, 152, 159) et soulève/dévie celui-ci et l'arrache ainsi hors d'une couture d'arrachement (17, 38, 134, 154) de la housse (2, 27, 117, 153).

4. Siège de véhicule selon l'une des revendications précédentes,
**caractérisé en ce que** pour une couture d'arrachement (17, 38, 134, 154) de la housse (2, 27, 117, 153) destinée à la sortie d'un airbag (16, 36, 111) du module l'airbag (6, 40, 51, 122, 150, 162) il est prévu des moyens qui sont conçus sous forme de ruban tissé ou sous forme de pièce conformée en particulier tissée pour la formation d'un ruban d'arrachement (3, 26, 109, 152, 159).

5. Siège de véhicule selon la revendication 4,
**caractérisé en ce que** le ruban d'arrachement (3, 26, 109, 152, 159) est cousu sous la forme d'un T, afin d'arracher un trou aussi grand que possible dans la couture d'arrachement (17, 38, 134, 154) de la housse (2, 27, 117, 153), ou
**en ce que** le ruban d'arrachement (3, 26, 109, 152, 159) est cousu sous la forme d'un V, afin d'atteindre un effet de pelage plus important dans la couture d'arrachement (17, 38, 134, 154) de la housse (2, 27, 117, 153), ou
**en ce que** le ruban d'arrachement (3, 26, 109, 152, 159) est cousu sous la forme d'un X, afin d'atteindre, grâce à un filament intégré, un trou et une traversée de grande taille au niveau de la couture d'arrachement (17, 38, 134, 154) de la housse (2, 27, 117, 153).

6. Siège de véhicule selon la revendication 4 ou 5,
**caractérisé en ce que** le ruban d'arrachement (3, 26, 109, 152, 159) est cousu uniquement avec la couture d'assemblage, afin d'obtenir des forces d'arrachement faibles au niveau de la couture d'arrachement (17, 38, 134, 154) de la housse (2, 27, 117, 153), ou
**en ce que** ledit au moins un ruban d'arrachement (3, 26, 109, 152, 159) est cousu là où un airbag (16, 36, 111) du module l'airbag (6, 40, 51, 122, 150, 162) doit sortir en premier à travers la couture d'arrachement (17, 38, 134, 154) de la housse (2, 27, 117, 153).

7. Siège de véhicule selon l'une des revendications précédentes,
**caractérisé en ce que** le mécanisme d'ouverture contient au moins un ruban d'arrachement (3, 26, 109, 152, 159) qui est conçu de telle façon que pendant le déploiement de l'airbag il se produit une longueur de pénétration du ruban d'arrachement (3, 26, 109, 152, 159) deux fois plus grande d'une couture d'arrachement (17, 38, 134, 154) de la housse (2, 27, 117, 153) pour la sortie d'un airbag (16 ; 36, 111) du module d'airbag (6, 40, 51, 122, 150, 162) en éloignement par rapport aux mouvement d'un couvercle (10, 29) du module d'airbag (6, 40, 51, 122, 150, 162), et
**en ce qu'**il est prévu un renvoi à la manière d'un palan pour ce doublement de la pénétration.

8. Siège de véhicule selon l'une des revendications précédentes,
**caractérisé en ce qu'**il contient un recouvrement souple (52, 130, 131) pour le module d'airbag (6, 40, 51, 122, 150, 162), qui est réalisé de telle façon qu'il contient le mécanisme d'ouverture avec au moins un ruban d'arrachement (3, 26, 109, 152, 159).

9. Siège de véhicule selon l'une des revendications précédentes,
**caractérisé en ce qu'**il contient un recouvrement souple (52, 130, 131) pour le module d'airbag (6, 40, 51, 122, 150, 162), qui est réalisé de telle façon qu'il présente un guidage de ruban d'arrachement pour le mécanisme d'ouverture avec au moins un ruban d'arrachement (3, 26, 109, 152, 159), de sorte que lors de l'ouverture d'un recouvrement supérieur du module d'airbag (6, 40, 51, 122, 150, 162), la longueur dudit au moins un ruban d'arrachement (3, 26, 109, 152, 159) qui est tiré en pénétration est doublée.

10. Siège de véhicule selon l'une des revendications précédentes,
**caractérisé en ce que** le module d'airbag (6, 40, 51, 122, 150, 162) contient un boîtier de module (164), lequel est conçu de telle manière qu'il loge un moyen de renvoi et une fixation d'au moins un ruban d'arrachement (3, 26, 109, 152, 159) du mécanisme d'ouverture.

11. Siège de véhicule selon l'une des revendications précédentes,
**caractérisé en ce qu'**il est prévu un recouvrement de siège postérieur, qui est conçu de telle façon qu'un couvercle (10, 29) du module d'airbag (6, 40, 51, 122, 150, 162) est intégré de manière non visible.

12. Siège de véhicule selon l'une des revendications précédentes,
**caractérisé en ce qu'**il contient un renvoi du ruban d'arrachement, conçu de telle manière qu'il forme une partie flexible sous la forme d'une boucle (155).

13. Siège de véhicule selon l'une des revendications précédentes,
**caractérisé en ce qu'**un boîtier du module d'airbag (164) est fabriqué d'un seul tenant et est doté d'une ouverture de montage.

14. Siège de véhicule selon la revendication 13,
**caractérisé en ce que** le boîtier du module d'airbag (164) est ainsi conçu que l'ouverture de montage se trouve à l'emplacement où le module d'airbag (6, 40, 51, 122, 150, 162) est le plus large.

15. Siège de véhicule selon la revendication 13 à 14,
**caractérisé en ce que** le boîtier du module d'airbag (164) contient un couvercle de fermeture, et est conçu de telle façon que le couvercle de fermeture représente une paroi de soutien lors du déploiement de l'airbag, ou
**en ce que** le boîtier du module d'airbag (164) est conçu de telle manière que le couvercle de fermeture est une patte rapportée par projection, laquelle est fixée à l'opposé, et **en ce que** la patte et le boîtier du module d'airbag (164) sont ainsi conçus que la patte est accrochée au boîtier du module d'airbag (164).

16. Siège de véhicule selon l'une des revendications 13 à 15,
**caractérisé en ce que** le boîtier du module d'airbag (164) est ainsi conçu qu'il peut être déformé de manière ovale pour l'intégration du module d'airbag (6, 40, 51, 122, 150, 162) et d'éléments de liaison dans le siège du véhicule.

17. Siège de véhicule selon l'une des revendications 13 à 16,
**caractérisé en ce qu'**il est prévu une aide de recherche pour un montage en aveugle d'éléments de liaison dans un fond du module d'airbag (6, 40, 51, 122, 150, 162) sous la forme de fentes.

18. Siège de véhicule selon l'une des revendications 13 à 16,
**caractérisé en ce qu'**il est prévu des organes auxiliaires (224) et un code à barres (222) pour surveiller le montage correct des organes auxiliaires (224), agencé de telle façon que la lisibilité du code à barres (222) dépend de la position correcte des organes auxiliaires (224) et/ou du module d'airbag (6, 40, 51, 122, 150, 162), et la position correcte des organes auxiliaires (224) et/ou du module d'airbag (6, 40, 51, 122, 150, 162) peut être confirmée grâce à la lisibilité du code à barres (222).

19. Siège de véhicule selon la revendication 18,
**caractérisé en ce que** le code à barres (222) est conçu pour la surveillance du mécanisme d'ouverture avec au moins un ruban d'arrachement (3, 26, 109, 152, 159), ou bien **en ce que** le code à barres (222) est conçu pour la surveillance d'un mécanisme à manchettes.

20. Siège de véhicule selon l'une des revendications précédentes,
**caractérisé en ce qu'**il contient un code à barres (222) conçu de telle façon que des données concernant le système d'airbag (40, 51), comme en particulier la date, le type et/ou la charge et/ou d'autres données, et/ou **en ce que** la reconnaissance de position sont contenues dans le code à barres (222) et peuvent être interrogées de préférence simultanément par un lecteur.

21. Procédé de fabrication pour un siège de véhicule qui comporte une housse (2, 27, 117, 153), et un système d'airbag (40, 51) avec un module d'airbag (6, 40, 51, 122, 150, 162) au-dessous de la housse (2, 27, 147 117, 153,
**caractérisé en ce que** le système d'airbag (40, 51) contient en outre une ouverture technique intégrée (3, 26, 109, 152, 159) pour la housse (2, 27, 117, 153), et **en ce que** le mécanisme d'ouverture intégré est fixé automatiquement simultanément avec le module d'airbag sur le siège de véhicule.
